# FASCICULE DE BREVET EUROPEEN

(11) **EP 3 755 754 B1**
(45) Date de publication et mention de la délivrance du brevet: **08.05.2024**
(21) Numéro de dépôt: 19713097.4
(22) Date de dépôt: 22.02.2019
(51) Int. Cl.: C09J 175/16, C08L 75/16, C08G 18/67, C08G 18/76, C08G 18/12, C08G 18/22, C08G 18/40

(54) **COMPOSITION A BASE DE POLYURETHANE COMPRENANT AU MOINS DEUX FONCTIONS ACRYLIQUE**
POLYURETHANBASIERTE ZUSAMMENSETZUNG MIT MINDESTENS ZWEI ACRYLISCHEN FUNKTIONEN
POLYURETHANE-BASED COMPOSITION COMPRISING AT LEAST TWO ACRYLIC FUNCTIONS

(30) Priorité: 23.02.2018 FR 1851591
(43) Date de publication de la demande: 30.12.2020
(73) Titulaire: Bostik SA, 92700 Colombes (FR)
(72) Inventeur: MICHAUD, Guillaume, 69006 Lyon (FR); PEREIRA-BAYART, Marjorie, 60280 Venette (FR)
(74) Mandataire: Arkema Patent
(86) Numéro de dépôt international: PCT/FR2019/050407
(87) Numéro de publication internationale: WO 2019/162629

(56) Documents cités:
- WO-A1-98/24826
- WO-A1-2018/011504
- US-A1- 2010 010 156

## Description

### DOMAINE DE L'INVENTION

La présente invention concerne une composition à base de polyuréthane comprenant au moins deux fonctions acrylique.

L'invention concerne également une structure multicouche (ou complexe), utilisable notamment dans le domaine de l'emballage flexible, qui comprend au moins deux couches de matériau liées entre elles par une couche de la composition selon l'invention.

La présente invention concerne également un procédé de complexage adapté à la fabrication dudit complexe.

### ARRIERE-PLAN TECHNOLOGIQUE

Les emballages flexibles destinés au conditionnement des produits les plus divers, tels ceux fabriqués pour les industries agroalimentaire, cosmétique ou de la détergence, sont généralement constitués de plusieurs couches minces (sous forme de feuilles ou de films) dont l'épaisseur est comprise entre 5 et 150 µm et qui sont constituées de différents matériaux comme le papier, un métal (par exemple l'aluminium) ou encore par des polymères thermoplastiques. Le film complexe (ou multicouche) correspondant, dont l'épaisseur peut varier de 20 à 400 µm, permet de combiner les propriétés des différentes couches individuelles de matériau et d'offrir ainsi au consommateur un ensemble de caractéristiques adaptées à l'emballage souple final comme, par exemple :
- son apparence visuelle (notamment celle des éléments imprimés présentant l'information concernant le produit emballé et destinée au consommateur),
- un effet de barrière à l'humidité atmosphérique ou à l'oxygène,
- un contact alimentaire sans risques de toxicité ou de modification des propriétés organoleptiques des aliments emballés,
- une résistance chimique pour certains produits tels que le ketchup ou le savon liquide,
- une bonne tenue à température élevée, par exemple en cas de pasteurisation ou de stérilisation. En particulier, le joint adhésif formé par réticulation de la couche adhésive reliant les couches individuelles de l'emballage doit conserver un niveau de cohésion suffisant après traitement thermique, afin d'éviter tout phénomène de délamination.

Pour constituer l'emballage final, le multicouche est généralement mis en forme par thermoscellage, à une température variant d'environ 120 à 250°C, cette dernière technique étant également utilisée pour la fermeture de l'emballage autour du produit destiné au consommateur.

Les diverses couches de matériau qui composent le multicouche sont combinées ou assemblées par contrecollage au cours de procédés industriels de complexage (également dénommés par le terme "lamination").

Ces procédés mettent en oeuvre des adhésifs (ou colles) et des dispositifs (ou machines) conçus à cet effet. Le film multicouche ainsi obtenu est souvent lui-même qualifié par le terme "laminé".

Ces procédés comprennent tout d'abord une étape d'enduction de l'adhésif sur une première couche de matériau, qui consiste en un dépôt d'une couche de colle continue et d'épaisseur contrôlée généralement inférieure à 10 µm, correspondant à une quantité de colle (ou grammage) également contrôlée, ne dépassant pas en général 10 g/m². Cette étape d'enduction est suivie d'une étape de contrecollage d'une deuxième couche de matériau, identique ou différent du premier, consistant en l'application sous pression de cette deuxième couche de matériau sur la première couche de matériau recouvert de la couche de colle.

Les adhésifs à base de polyuréthane à terminaisons NCO sont couramment utilisés pour ce type d'application.

Toutefois, des compositions à base de polyuréthane à terminaisons NCO présentent en général l'inconvénient de comporter des teneurs résiduelles importantes en diisocyanate aromatique provenant de la réaction de synthèse du polyuréthane, susceptibles de conduire à un certain nombre d'inconvénients, notamment des problèmes de toxicité. En effet, le non-étiquetage des polyuréthanes nécessite des teneurs résiduelles en diisocyanate inférieures à 0,1% en poids. Afin d'obtenir des teneurs résiduelles aussi faibles, les procédés de production peuvent être contraignants. En outre, il a été observé que les compositions de polyuréthane possédant une teneur en monomère MDI (diisocyanate aromatique) inférieure ou égale à 1% en poids par rapport au poids de la composition de polyuréthane, sont hautement visqueuses à température ambiante et présentent des problèmes de stabilité dans le temps en termes de viscosité.

D'autres types de compositions adhésives à base de polymère comprenant des groupements terminaux de type accepteurs de Michael existent. Toutefois, ces compositions ne permettent pas d'obtenir des structures multicouches résistantes à un traitement thermique à haute température, tel qu'une pasteurisation ou une stérilisation. Ceci peut avoir pour conséquence la dégradation du joint adhésif (présence de boursouflures, bulles et/ou de canaux au sein du joint adhésif), rendant en particulier la structure multicouche impropre à la fabrication d'emballages flexibles destinés au conditionnement de produits alimentaires.

Le but de la présente invention est de fournir une composition à base de polyuréthane ne présentant pas les inconvénients des compositions existantes, et en particulier une composition conduisant à une structure multicouche présentant une meilleure résistance au traitement thermique, de préférence une meilleure tenue thermique vis-à-vis du test de stérilisation et/ou pasteurisation.

### DESCRIPTION DE L'INVENTION

Dans la présente demande, en l'absence d'indication contraire :
- les quantités exprimées sous la forme de pourcentage correspondent à des pourcentages poids/poids ;
- l'indice hydroxyle d'un composé alcoolique représente le nombre de fonctions hydroxyles par gramme de produit, lequel est exprimé sous la forme du nombre équivalent de milligrammes de potasse (KOH) utilisés dans le dosage des fonctions hydroxyles, par gramme de produit ;
- l'alcalinité primaire représente le nombre de fonctions -NH₂ par gramme de produit, laquelle est exprimée sous la forme du nombre de milliéquivalents de -NH₂ par gramme de produit. Il peut être mesuré par RMN ou par potentiométrie selon des méthodes bien connues de l'homme du métier ;
- l'alcalinité secondaire représente le nombre de fonctions -NH- par gramme de produit, laquelle est exprimée sous la forme du nombre de milliéquivalents de -NH- par gramme de produit. Il peut être mesuré par RMN ou par potentiométrie selon des méthodes bien connues de l'homme du métier ;
- l'alcalinité totale représente le nombre de fonctions aminées (de type amine primaire, secondaire et tertiaire) par gramme de produit, laquelle est exprimée sous la forme de milliéquivalent de HCl par gramme de produit. L'alcalinité totale peut être déterminée par RMN ou dosage potentiométrique ;
- la mesure de viscosité à 23°C peut se faire à l'aide d'un viscosimètre Brookfield selon la norme ISO 2555. Typiquement, la mesure réalisée à 23°C peut se faire à l'aide d'un viscosimètre Brookfield RVT, d'une aiguille adaptée au domaine de viscosité et à une vitesse de rotation de 20 tours par minute (tr/mn). La viscosité d'un produit est de préférence mesurée au moins 24 heures après fabrication dudit produit ;
- les masses moléculaires moyennes en nombre (Mn) des polyols exprimées en g/mole sont calculées à partir de leurs indices d'hydroxyles et de leurs fonctionnalités ;
- les masses molaires des polyamines (B1) exprimées en g/mole sont calculées à partir de leurs alcalinités primaires et/ou totales, et de leur fonctionnalité ;
- les masses molaires (ou masses molaires moyennes en cas de mélange) des polyamines (B2) sont calculées à partir de leurs structures chimiques (RMN ¹H/¹³C) et de leurs alcalinités primaires et/ou secondaires et/ou tertiaires et/ou totales.

Un premier objet de la présente invention concerne une composition, de préférence adhésive, comprenant :
- une composition A comprenant au moins un polyuréthane comprenant au moins deux fonctions terminales acryliques T de formule (I) suivante :

   CH₂=CH-C(=O)-X- (I)

   avec X représentant -O- ou -NRₐ- avec Rₐ représentant H ou un radical alkyle comprenant de 1 à 22 atomes de carbone, de préférence de 1 à 14 atomes de carbone, X représentant de préférence -O- ;
   et
- une composition B comprenant :
   ∘ au moins une polyamine B1 comprenant uniquement deux groupes -CH₂NH₂ ; et
   ∘ au moins une polyamine B2 comprenant au moins deux fonctions amine primaire -NH₂.

### A. Composition

### Composition A

La composition A peut comprendre de 10% à 100% en poids d'au moins un polyuréthane susmentionné comprenant au moins deux fonctions terminales T, de préférence de 20% à 95% en poids, plus préférentiellement de 30% à 90% en poids, et mieux encore de 40% à 80% en poids, par rapport au poids total de la composition A.

Le polyuréthane susmentionné comprenant au moins deux fonctions terminales T peut être obtenu par réaction :
- d'un polyuréthane comprenant au moins deux fonctions terminales -NCO, et d'au moins composé choisi parmi un ester hydroxylé de l'acide acrylique ou une amide hydroxylée de l'acide acrylique ; ou
- d'un polyuréthane comprenant au moins deux fonctions terminales -OH, et d'au moins un composé choisi parmi un chlorure de l'acide acrylique ou un ester de l'acide acrylique.

Dans le cadre de l'invention, et sauf mention contraire, on entend par « ester hydroxylé de l'acide acrylique », un ester de l'acide acrylique dont le radical ester est substitué par au moins un groupe hydroxyle. On peut par exemple représenter un ester hydroxylé de l'acide acrylique par la formule suivante :

CH₂=CH-C(=O)-O-R

dans laquelle R représente un radical organique substitué par au moins un groupe hydroxyle.

Selon un mode de réalisation, l'ester hydroxylé de l'acide acrylique a la formule (II) suivante :

CH₂=CH-C(=O)-O-R⁰-OH (II)

dans laquelle R⁰ représente un radical hydrocarboné divalent linéaire ou ramifié, aliphatique ou cyclique, saturé ou insaturé, comprenant de préférence de 2 à 240 atomes de carbone, et étant éventuellement interrompu par un ou plusieurs hétéroatomes (tel que par exemple N, O, S, et en particulier O), et/ou éventuellement interrompu par un ou plusieurs groupes aromatiques, et/ou éventuellement interrompu par un ou plusieurs groupes divalents - N(R_{b})- avec R_{b} représentant un radical alkyle linéaire ou ramifié comprenant de 1 à 22 atomes de carbone (amine tertiaires), -C(=O)O- (ester), -C(=O)NH- (amide), -NHC(=O)O-(carbamate), -NHC(=O)-NH- (urée), ou -C(=O)- (carbonyle), et/ou étant éventuellement substitué.

De préférence, l'ester hydroxylé de l'acide acrylique a l'une des formules suivantes :
- Formule (II-1) :

   CH₂=CH-C(=O)-O-R¹-OH (II-1)

   dans laquelle R¹ représente un radical alkylène divalent linéaire ou ramifié, aliphatique ou cyclique, saturé ou insaturé, comprenant de 2 à 22 atomes de carbone, de préférence de 2 à 18, préférentiellement de 2 à 14, encore plus préférentiellement de 2 à 10, et avantageusement de 2 à 6 atomes de carbone ;
- Formule (II-2) :

   CH₂=CH-C(=O)-O-R²-O-[C(=O)-(CH₂)ᵣ-O]ₛ-H (II-2)

   dans laquelle :
   - r est un nombre entier allant de 1 à 10, de préférence de 1 à 5, et préférentiellement r est égal à 5 ;
   - s est un nombre entier allant de 1 à 10, s étant de préférence égal à 2 ;
   - R² représente un radical alkylène divalent linéaire ou ramifié, aliphatique ou cyclique, saturé ou insaturé, comprenant de 2 à 22 atomes de carbone, de préférence de 2 à 18, préférentiellement de 2 à 14, encore plus préférentiellement de 2 à 10, et avantageusement de 2 à 6 atomes de carbone ;
- Formule (II-3) :

   CH₂=CH-C(=O)-O-[R³-O]ₜ-H (II-3)

   dans laquelle R³ représente un radical alkylène divalent linéaire ou ramifié, aliphatique ou cyclique, saturé ou insaturé, comprenant de 2 à 4 atomes de carbone, t est un nombre entier allant de 2 à 120, de préférence de 1 à 10, t étant de préférence égal à 2 ou 3.

Parmi les esters hydroxylés de l'acide acrylique de formule (II-1), on peut citer par exemple le 2-hydroxyéthyl acrylate (HEA), le 2-hydroxypropyl acrylate (HPA), le 4-hydroxybutyl acrylate (4-HBA), le 2-hydroxybutyl acrylate (HBA) (par exemple disponibles chez SARTOMER, COGNIS ou BASF).

Parmi les composés de formule (II-2) ci-dessus, on peut citer par exemple le polycaprolactone acrylate SR 495B (CAPA) disponible chez SARTOMER ou le hydroxyéthylcaprolactone acrylate (HECLA) disponible chez BASF.

Parmi les dérivés éthoxylés et/ou propoxylés de l'acide acrylique de formule (II-3) susmentionée, on peut par exemple citer le BLEMMER ^{®} AP-150, le BLEMMER ^{®} AP-200, le BLEMMER ^{®} AP-400, le BLEMMER ^{®} AP-550, le BLEMMER ^{®} AP-800, le BLEMMER ^{®} AP-1000, le BLEMMER ^{®} AE-90, le BLEMMER ^{®} AE-150, le BLEMMER ^{®} AE-200, le BLEMMER ^{®} AE-350, le BLEMMER ^{®} AE-400, commercialisés par NIPPON OIL & FATS CORPORATION, ou encore le SR 604 de chez SARTOMER.

De préférence, l'ester hydroxylé de l'acide acrylique a la formule (II-1) susmentionée, et en particulier l'une des formules (II-1-1) ou (II-1-2) suivantes :
- CH₂=CH-C(=O)-O-CH₂-CH₂-OH (II-1-1)

   : 2-hydroxyéthylacrylate (HEA);
- CH₂=CH-C(=O)-O-CH₂-CH(Me)-OH (II-1-2):

   2-hydroxypropylacrylate (HPA).

Dans le cadre de l'invention, et sauf mention contraire, on entend par « amide hydroxylée de l'acide acrylique », une amide de l'acide acrylique dont le radical amide est substitué par au moins un groupe hydroxyle. On peut par exemple représenter une amide hydroxylée de l'acide acrylique par la formule suivante :

CH₂=CH-C(=O)-N(Rₐ)-R'

dans laquelle R' représente un radical organique substitué par au moins un groupe hydroxyle, et Rₐ représentant H ou un radical alkyle comprenant de 1 à 22 atomes de carbone, de préférence de 1 à 18, préférentiellement de 1 à 14, avantageusement de 1 à 10, et encore plus avantageusement de 1 à 6 atomes de carbone.

Selon un mode de réalisation, l'amide hydroxylée de l'acide acrylique a la formule (II') suivante :

CH₂=CH-C(=O)-N(Rₐ)-R'⁰-OH (II')

dans laquelle Rₐ est tel que défini ci-dessus, et R'⁰ représente un radical hydrocarboné divalent linéaire ou ramifié, aliphatique ou cyclique, saturé ou insaturé, comprenant de préférence de 1 à 240 atomes de carbone, et étant éventuellement interrompu par un ou plusieurs hétéroatomes (tel que par exemple N, O, S, et en particulier O), et/ou éventuellement interrompu par un ou plusieurs groupes aromatiques, et/ou éventuellement interrompu par un ou plusieurs groupes divalents -N(R_{b})- avec R_{b} étant tel que défini ci-dessus (amine tertiaires), -COO- (ester), -C(=O)NH- (amide), -NHC(=O)O- (carbamate), - NHC(=O)-NH- (urée), ou -C(=O)- (carbonyle), et/ou étant éventuellement substitué.

Selon un mode de réalisation, l'amide hydroxylée de l'acide acrylique a l'une des formules suivantes :
- Formule (II'-1) :

   CH₂=CH-C(=O)-N(Rₐ)-R'¹-OH (II'-1)

   dans laquelle Rₐ est tel que défini précédemment, et R'¹ représente un radical alkylène divalent linéaire ou ramifié, aliphatique ou cyclique, saturé ou insaturé, comprenant de 1 à 22 atomes de carbone, de préférence de 1 à 18, préférentiellement de 1 à 14, encore plus préférentiellement de 1 à 10, et avantageusement de 1 à 6 atomes de carbone ;
- Formule (II'-2) :

   CH₂=CH-(=O)-N(Rₐ)-R'²-O-[C(=O)-(CH₂)_{r'}-O]_{s'}-H (II'-2)

   dans laquelle :
   - Rₐ est tel que défini précédemment ;
   - r' est un nombre entier allant de 1 à 10, de préférence de 1 à 5, et préférentiellement r est égal à 5 ;
   - s' est un nombre entier allant de 1 à 10, s étant de préférence égal à 2 ;
   - R'² représente un radical alkylène divalent linéaire ou ramifié, aliphatique ou cyclique, saturé ou insaturé comprenant de 2 à 22 atomes de carbone, de préférence de 2 à 18, de préférence de 2 à 14, préférentiellement de 2 à 10, et avantageusement de 2 à 6 atomes de carbone ;
- Formule (II'-3) :

   CH₂=CH-C(=O)-N(Rₐ)-[R^{'3}-O]_{t'}-H (II'-3)

   dans laquelle Rₐ est tel que défini précédemment, R'³ représente un radical alkylène divalent linéaire ou ramifié, aliphatique ou cyclique, saturé ou insaturé, comprenant de 2 à 4 atomes de carbone, t' est un nombre entier allant de 2 à 120, de préférence de 1 à 10, t représentant de préférence 2 ou 3.

De préférence, l'amide hydroxylée de l'acide acrylique a la formule (II'-1) susmentionée, et en particulier l'une des formules (II'-1-1) ou (II'-1-2) suivantes :
- CH₂=CH-C(=O)-NH-CH₂-CH₂-OH (II'-1-1)

   : 2-hydroxyéthylacrylamide ;
- CH₂=CH-C(=O)-NH-CH₂-CH(Me)-OH (II'-1-2)

   : 2-hydroxypropylacrylamide.

Selon un premier mode de réalisation, le polyuréthane susmentionné comprenant au moins deux fonctions terminales T est préparé par réaction d'un polyuréthane comprenant au moins deux fonctions terminales -OH ; et d'au moins un chlorure d'acide acrylique ou d'au moins un ester de l'acide acrylique.

En particulier, le polyuréthane susmentionné comprenant au moins deux fonctions terminales T est préparé selon un procédé comprenant les étapes suivantes :
- E'1) la préparation d'un polyuréthane à terminaisons OH par une réaction de polyaddition :
   i) d'au moins un polyisocyanate, de préférence choisi parmi les diisocyanates, les triisocyanates, et leurs mélanges ;
   ii) avec au moins un polyol, de préférence choisi parmi les polyester polyols, les polyéther polyols, les polyène polyols, les polycarbonate polyols, les poly(éther-carbonate) polyols, les polymères à terminaisons -OH, et leurs mélanges,
   dans des quantités telles que le rapport molaire NCO/OH (r1) est strictement inférieur à 1, de préférence va de 0,2 à 0,8, et préférentiellement va de 0,3 à 0,5;
   et
- E'2) la réaction du produit formé à l'issue de l'étape E'1) avec le chlorure de l'acide acrylique ou avec un ester de l'acide acrylique, dans des quantités telles que le rapport molaire OH/-C(=O)X' (avec X' représentant Cl ou O) (r2) est inférieur ou égal à 1, de préférence va de 0,90 à 1,00, et préférentiellement va de 0,95 et 1,00.

Dans le cadre de l'invention, et sauf mention contraire, (r1) est le rapport molaire NCO/OH correspondant au rapport molaire du nombre de groupes isocyanates (NCO) sur le nombre de groupes hydroxyles (OH) portés par l'ensemble des polyisocyanate(s) et polyol(s) présents dans le milieu réactionnel de l'étape E'1).

Dans le cadre de l'invention, et sauf mention contraire, (r2) est le rapport molaire OH/-C(=O)X' (avec X' représentant Cl ou O) correspondant au rapport molaire du nombre de groupes hydroxyles (OH) sur le nombre de groupes -C(=O)-Cl (chlorure d'acide) ou -C(=O)-O (esters) portés respectivement par l'ensemble des composés alcools (polyuréthane à terminaisons -OH obtenu à l'issue de l'étape E'1) et éventuellement le(s) polyols(s) non réagi(s) à l'issue de l'étape E'1)), et dérivés acrylique(s) (chlorure de l'acide acrylique ou ester de l'acide acrylique présent dans le milieu réactionnel de l'étape E'2).

Selon un deuxième mode de réalisation, le polyuréthane susmentionné comprenant au moins deux fonctions terminales T est préparé par réaction d'un polyuréthane comprenant au moins deux fonctions terminales -NCO; et d'au moins un ester hydroxylé de l'acide acrylique tel que défini ci-dessus ou d'au moins une amide hydroxylée de l'acide acrylique telle que définie ci-dessus.

De préférence, le polyuréthane susmentionné comprenant au moins deux fonctions terminales T est préparé par un procédé comprenant les étapes suivantes:
- E1) la préparation d'un polyuréthane à terminaisons NCO par une réaction de polyaddition :
   i) d'au moins un polyisocyanate, de préférence choisi parmi les diisocyanates, les triisocyanates, et leurs mélanges ;
   ii) avec au moins un polyol, de préférence choisi parmi les polyester polyols, les polyéther polyols, les polyène polyols, les polycarbonate polyols, les poly(éther-carbonate) polyols, les polymères à terminaisons -OH, et leurs mélanges ;
   dans des quantités telles que le rapport molaire NCO/OH (r3) est strictement supérieur à 1, de préférence va de 1,3 à 2,0, et préférentiellement va de 1,5 à 1,7 ;
   et
- E2) la réaction du produit formé à l'issue de l'étape E1) avec au moins un ester hydroxylé de l'acide acrylique tel que défini ci-dessus (de préférence de formules (II-1-1) ou (II-1-2) susmentionnées) ou au moins une amide hydroxylée de l'acide acrylique telle que définie ci-dessus (de préférence de formule (II'-1-1) ou (II'-1-2) susmentionnées), dans des quantités telles que le rapport molaire OH/NCO (r4) est inférieur ou égal à 1, de préférence va de entre 0,90 à 1,00, et préférentiellement va de 0,95 à 1,00.

Préférentiellement, l'étape E2) est réalisée avec au moins un ester hydroxylé de l'acide acrylique tel que défini ci-dessus, de préférence de formules (II-1-1) ou (II-1-2) susmentionnées.

Dans le cadre de l'invention, et sauf mention contraire, (r3) est le rapport molaire NCO/OH correspondant au rapport molaire du nombre de groupes isocyanates (NCO) sur le nombre de groupes hydroxyles (OH) portés par l'ensemble des polyisocyanate(s) et polyol(s) présents dans le milieu réactionnel de l'étape E1).

Lorsque le polyuréthane à terminaisons NCO est obtenu lors de l'étape E1) à partir d'un mélange de polyisocyanates ou de plusieurs polyisocyanates ajoutés successivement, le calcul du rapport (r3) tient compte d'une part des groupes NCO portés par l'ensemble du(des) polyisocyanate(s) présent(s) dans le milieu réactionnel de l'étape E1), et d'autre part des groupes OH portés par le(s) polyol(s) présent(s) dans le milieu réactionnel de l'étape E1).

Dans le cadre de l'invention, et sauf mention contraire, (r4) est le rapport molaire OH/NCO correspondant au rapport molaire du nombre de groupes hydroxyles (OH) sur le nombre de groupes isocyanates (NCO) portés respectivement par l'ensemble du(des) alcool(s), et des isocyanate(s) (s'agissant notamment du polyuréthane à terminaisons NCO et éventuellement le(s) polyisocyanate(s) non réagi(s) à l'issue de l'étape E1)) présents dans le milieu réactionnel de l'étape E2).

### Etape E1) et E'1)

### Polyol(s)

Le(s) polyol(s) utilisé(s) selon l'invention peu(ven)t être choisi(s) parmi ceux dont la masse moléculaire moyenne en nombre (Mn) va de 200 à 20 000 g/mol, de préférence de 300 à 12 000 g/mol, et préférentiellement de 400 à 4 000 g/mol.

De préférence, leur fonctionnalité hydroxyle va de 2 à 6, préférentiellement de 2 à 3. La fonctionnalité hydroxyle est le nombre moyen de fonction hydroxyle par mole de polyol.

De préférence, le(s) polyol(s) utilisable(s) selon l'invention présente(nt) un indice hydroxyle (IOH) (moyen) allant de 5 à 840 milligrammes de KOH par gramme de polyol (mg KOH/g), de préférence de 9 à 560 mg KOH/g, de préférence de 28 à 420 mg KOH/g, de préférence encore de 100 à 400 mg KOH/g.

Selon un mode de réalisation particulier, l'indice hydroxyle de polyol(s) présentant une fonctionnalité hydroxyle de 2 va de 5 à 560 mg KOH/g, de préférence de 9 à 374 mg KOH/g, de préférence de 28 à 280 mg KOH/g, de préférence encore de 100 à 280 mg KOH/g.

Selon un mode de réalisation, l'indice hydroxyle de polyol(s) présentant une fonctionnalité hydroxyle de 3 va de 8 à 840 mg KOH/g, de préférence 14 à 560 mg KOH/g, de préférence de 42 à 420 mg KOH/g, de préférence encore de 200 à 400 mg KOH/g.

Le(s) polyol(s) utilisable(s) peu(ven)t être choisi(s) parmi les polyester polyols, les polyéther polyols, les polyène polyols, les polycarbonate polyols, les poly(éther-carbonate) polyols, les polymères à terminaisons -OH, et leurs mélanges.

Le(s) polyol(s) utilisable(s) peu(ven)t être choisi(s) parmi les polyols aromatiques, les polyols aliphatiques, les polyols arylaliphatiques et les mélanges de ces composés.

Selon l'invention, le(s) polyester polyol(s) peut(vent) avoir une masse moléculaire moyenne en nombre allant de 1 000 g/mol à 10 000 g/mol, de préférence de 1 000 g/mol à 6 000 g/mol.

Les polyester polyols peuvent être choisis parmi les polyester diols et les polyester triols, et de préférence parmi les polyester diols.

Parmi les polyester polyols, on peut par exemple citer :
- les polyesters polyols d'origine naturelle tel que l'huile de ricin ;
- les polyesters polyols résultant de la polycondensation :
   - d'un ou plusieurs polyols aliphatiques (linéaires, ramifiés ou cycliques) ou aromatiques tels que par exemple le monoéthylène glycol, le diéthylène glycol, le 1,2-propanediol, le 1,3-propanediol, le 1,4-butanediol, le butènediol, le 1,6-hexanediol, le cyclohexane diméthanol, le tricyclodécane diméthanol, le néopentyl glycol, le cyclohexane diméthanol, le glycérol, le triméthylolpropane, le 1,2,6-hexanetriol, le sucrose, le glucose, le sorbitol, le pentaérythritol, le mannitol, la N-méthyldiéthanolamine, la triéthanolamine, un alcool gras dimère, un alcool gras trimère et leurs mélanges, avec
   - un ou plusieurs acide polycarboxylique ou son dérivé ester ou anhydride tel que l'acide 1,6-hexanedioïque (acide adipique), l'acide dodécanedioïque, l'acide azélaïque, l'acide sébacique, l'acide adipique, l'acide 1,18-octadécanedioïque, l'acide phtalique, l'acide isophtalique, l'acide téréphtalique, l'acide succinique, un acide gras dimère, un acide gras trimère et les mélanges de ces acides, un anhydride insaturé tel que par exemple l'anhydride maléique ou phtalique, ou une lactone telle que par exemple la caprolactone.
- les estolides polyols résultant de la polycondensation d'un ou plusieurs hydroxyacides, tel que l'acide ricinoléïque, sur un diol (on peut par exemple citer les « POLYCINO D-1000 » et « POLYCIN^{®} D-2000 » disponibles chez VERTELLUS).

Les polyester polyols suscités peuvent être préparés de manière conventionnelle, et sont pour la plupart disponibles commercialement.

Parmi les polyesters polyols, on peut par exemple citer les produits suivants de fonctionnalité hydroxyle égale à 2 :
- le « TONE^{®} 0240 » (commercialisé par UNION CARBIDE) qui est une polycaprolactone de masse moléculaire moyenne en nombre d'environ 2000 g/mol, et un point de fusion de 50°C environ,
- le « DYNACOLL^{®} 7381 » (comercialisé par EVONIK) de masse moléculaire moyenne en nombre d'environ 3500 g/mol, et ayant un point de fusion de 65°C environ,
- le « DYNACOLLO 7360 » (commercialisé par EVONIK) qui résulte de la condensation de l'acide adipique avec l'hexanediol, et a une masse moléculaire moyenne en nombre d'environ 3500 g/mol, et un point de fusion de 55°C environ,
- le « DYNACOLL^{®} 7330 » (commercialisé par EVONIK) de masse moléculaire moyenne en nombre d'environ 3500 g/mol, et ayant un point de fusion de 85°C environ,
- le « DYNACOLL^{®} 7363 » (commercialisé par EVONIK) qui résulte également de la condensation de l'acide adipique avec l'hexanediol, et a une masse moléculaire moyenne en nombre d'environ 5500 g/mol, et un point de fusion de 57°C environ,
- le « DYNACOLL^{®} 7250 » (commercialisé par EVONIK) : polyester polyol ayant une viscosité de 180 Pa.s à 23°C, une masse moléculaire moyenne en nombre Mn égale à 5 500 g/mol, et une T_{g} égale à -50°C,
- le « KURARAY^{®} P-6010 » (commercialisé par KURARAY) : polyester polyol ayant une viscosité de 68 Pa.s à 23°C, une masse moléculaire moyenne en nombre Mn égale à 6 000 g/mol, et une T_{g} égale à -64°C,
- le « KURARAY^{®} P-10010 » (commercialisé par KURARAY) : polyester polyol ayant une viscosité de 687 Pa.s à 23°C, et une masse moléculaire moyenne en nombre Mn égale à 10 000 g/mol,
- le « REALKYD^{®} XTR 10410 » (commercialisé par la société CRAY VALLEY) : polyester polyol ayant de masse moléculaire moyenne en nombre Mn voisine de 1000 g/mol et dont l'indice hydroxyle va de 108 à 116 mg KOH/g. Il s'agit d'un produit issu de la condensation d'acide adipique, de diéthylèneglycol et de monoéthylèneglycol,
- le « DEKATOL^{®} 3008 » (commercialisé par la société BOSTIK) de masse molaire moyenne en nombre Mn voisine de 1060 g/mol et dont l'indice hydroxyle va de 102 à 112 mg KOH/g. Il s'agit d'un produit issu de la condensation d'acide adipique, de diéthylèneglycol et de monoéthylèneglycol.

Selon l'invention, le(s) polyéther polyol(s) peut(vent) avoir une masse moléculaire moyenne en nombre allant de 200 à 20 000 g/mol, de préférence de 300 à 12 000 g/mol, et préférentiellement de 400 à 4 000 g/mol.

Le(s) polyéther polyol(s) utilisable(s) selon l'invention est (sont) de préférence choisi(s) parmi les polyoxyalkylène polyols, dont la partie alkylène, linéaire ou ramifiée, comprend de 1 à 4 atomes de carbone, plus préférentiellement de 2 à 3 atomes de carbone.

Plus préférentiellement, le(s) polyéther polyol(s) utilisable(s) selon l'invention est (sont) de préférence choisi(s) parmi les polyoxyalkylène diols ou polyoxyalkylène triols, dont la partie alkylène, linéaire ou ramifiée, comprend de 1 à 4 atomes de carbone, plus préférentiellement de 2 à 3 atomes de carbone.

A titre d'exemple de polyoxyalkylène diols ou triols utilisables selon l'invention, on peut citer :
- les polyoxypropylène diols ou triols (aussi désignés par polypropylène glycol (PPG) diols ou triols) ayant une masse moléculaire moyenne en nombre (Mn) allant de 300 à 12 000 g/mol ;
- les polyoxyéthylène diols ou triols (aussi désignés par polyéthylène glycol (PEG) diols ou triols) ayant une masse moléculaire moyenne en nombre (Mn) allant de 300 à 12 000 g/mol;
- et leurs mélanges.

Les polyéther polyols suscités peuvent être préparés de manière conventionnelle, et sont largement disponibles dans le commerce. Ils peuvent être obtenus par polymérisation de l'oxyde d'alkylène correspondant en présence d'un catalyseur basique (par exemple de la potasse) ou d'un catalyseur à base d'un double complexe métal-cyanure.

A titre d'exemple de polyéther diol, on peut citer le polyoxypropylène diol commercialisé sous la dénomination « VORANOL@ P 400 » par la société DOW de masse moléculaire moyenne en nombre (Mn) voisine de 400 g/mol et dont l'indice hydroxyle va de 250 à 270 mg KOH/g.

A titre d'exemple de polyéther triol, on peut citer le polyoxypropylène triol commercialisé sous la dénomination « VORANOL^{®} CP 450 » par la société DOW, de masse moléculaire moyenne en nombre (Mn) voisine de 450 g/mol et dont l'indice hydroxyle va de 370 à 396 mg KOH/g, ou le polyoxypropylène triol commercialisé sous la dénomination « VORANOL^{®} CP3355 » par la société DOW, de masse moléculaire moyenne en nombre voisine de 3 554 g/mol.

Le(s) polyène polyol(s) utilisable(s) selon l'invention peu(ven)t être choisi(s) de préférence parmi les polyènes comportant des groupes hydroxyles terminaux, et leurs dérivés correspondants hydrogénés ou époxydés.

De préférence, le(s) polyène polyol(s) utilisable(s) selon l'invention est (sont) choisi(s) parmi les polybutadiènes comportant des groupes hydroxyles terminaux, éventuellement hydrogénés ou époxydés. Préférentiellement, le(s) polyène polyol(s) utilisable(s) selon l'invention est (sont) choisi(s) parmi les homopolymères et copolymères de butadiène comportant des groupes hydroxyles terminaux, éventuellement hydrogénés ou époxydés.

Dans le cadre de l'invention, et sauf mention contraire, on entend par « groupes hydroxyles terminaux » d'un polyène polyol, les groupes hydroxyles situés aux extrémités de la chaîne principale du polyène polyol.

Les dérivés hydrogénés mentionnés ci-dessus peuvent être obtenus par hydrogénation totale ou partielle des doubles liaisons d'un polydiène comportant des groupes hydroxyles terminaux, et sont donc saturé(s) ou insaturé(s).

Les dérivés époxydés mentionnés ci-dessus peuvent être obtenus par époxydation chémiosélective des doubles liaisons de la chaîne principale d'un polyène comportant des groupes hydroxyles terminaux, et comportent donc au moins un groupe époxy dans sa chaîne principale.

A titre d'exemples de polyène polyols, on peut citer les homopolymères de butadiène, saturé ou insaturé, comprenant des groupes hydroxyles terminaux, éventuellement époxydés, tels que par exemple ceux commercialisés sous la dénomination « POLY BD^{®} ou KRASOLO » par la société CRAY VALLEY.

Les polycarbonate polyols peuvent être choisis parmi les polycarbonate diols ou triols, ayant en particulier une masse moléculaire moyenne en nombre (Mₙ) allant de 300 à 12 000 g/mol.

A titre d'exemple de polycarbonate diol, on peut citer :
- le « CONVERGE^{®} POLYOL 212-10 » et « CONVERGE^{®} POLYOL 212-20 » commercialisés par la société NOVOMER respectivement de masse moléculaire en nombre (Mₙ) égales à 1 000 et 2 000 g/mol dont les indices hydroxyles sont respectivement de 112 et 56 mg KOH/g,
- le « DESMOPHEN^{®} C XP 2716 » commercialisé par COVESTRO de masse moléculaire en nombre (Mₙ) égale à 326 g/mol et dont l'indice hydroxyle est de 344 mg KOH/g,
- les « POLYOL C-590, C1090, C-2090 et C-3090 » commercialisés par KURARAY ayant une masse moléculaire en nombre (Mₙ) allant de 500 à 3 000 g/mol et un indice hydroxyle allant de 224 à 37 mg KOH/g.

Selon l'invention, les polymères à terminaisons -OH peuvent être obtenus par réaction de polyaddition entre un ou plusieurs polyol(s), et un ou plusieurs polyisocyanate(s), dans des quantités de polyisocyanate(s) et de polyol(s) conduisant à un rapport molaire NCO/OH strictement inférieur à 1. La réaction peut être réalisée en présence d'un catalyseur. Les polyols et polyisocyanates utilisables peuvent être ceux typiquement utilisés pour la préparation de polymères à terminaisons -OH, et de préférence ceux décrits dans la présente demande.

Selon un mode de réalisation préféré, l'étape E1) est réalisée en présence d'un mélange de polyols, comprenant de préférence au moins un polyéther polyol et/ou au moins un polyester. De préférence, l'étape E1) est réalisée en présence d'un mélange d'au moins deux polyéther polyols (de préférence un polyéther diol et un polyéther triol), et d'un polyester (de préférence polyester diol).

Les polyols susmentionnés peuvent également être utilisés dans l'étape E'1) telle que définie précédemment.

### Polyisocyanate(s)

Le(s) polyisocyanate(s) utilisable(s) selon l'invention dans les étapes E1) ou E'1) peuvent être ajoutés séquentiellement ou mis à réagir sous la forme de mélange.

Selon un mode de réalisation, le(s) polyisocyanate(s) utilisable(s) sont des diisocyanate(s), de préférence choisi dans le groupe constitué de l'isophorone diisocyanate (IPDI), de l'hexaméthylène diisocyanate (HDI), de l'heptane diisocyanate, de l'octane diisocyanate, du nonane diisocyanate, du décane diisocyanate, de l'undécane diisocyanate, du dodécane diisocyanate, du 4,4'-méthylènebis(cyclohexylisocyanate) (4,4'-HMDI), du norbornane diisocyanate, du norbornène diisocyanate, du 1,4-cyclohexane diisocyanate (CHDI), du méthylcyclohexane diisocyanate, de l'éthylcyclohexane diisocyanate, du propylcyclohexane diisocyanate, du méthyldiéthylcyclohexane diisocyanate, du cyclohexane diméthylène diisocyanate, du 1,5-diisocyanato-2-méthylpentane (MPDI), du 1,6-diisocyanato-2,4,4-triméthylhexane, du 1,6-diisocyanato-2,2,4-triméthylhexane (TMDI), du 4-isocyanatométhyl-1,8-octane diisocyanate (TIN), du (2,5)-bis(isocyanatométhyl)bicyclo[2.2.1]heptane (2,5-NBDI), du (2,6)-bis(isocyanatométhyl)bicyclo[2.2.1]heptane (2,6-NBDI), du 1,3-bis(isocyanatomethyl)cyclohexane (1,3-H6-XDI), du 1,4-bis(isocyanatomethyl)-cyclohexane (1,4-H6-XDI), du xylylène-diisocyanate (XDI) (en particulier le m-xylylène diisocyanate (m-XDI)), du toluène diisocyanate (en particulier le 2,4-toluène diisocyanate (2,4-TDI) et/ou le 2,6-toluène diisocyanate (2,6-TDI)), du diphénylméthane diisocyanate (en particulier le 4,4'-diphénylméthane diisocyanate (4,4'-MDI) et/ou le 2,4'-diphénylméthane diisocyanate (2,4'-MDI)), du tétraméthylxylylène diisocyanate (TMXDI) (en particulier le tétraméthyl (méta)xylylène diisocyanate), d'un allophanate de HDI ayant par exemple la formule (Y) suivante : 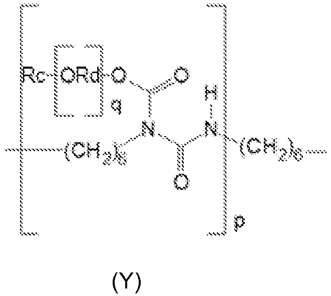 dans laquelle p est un nombre entier allant de 1 à 2, q est un nombre entier allant de 0 à 9, et de préférence 2 à 5, R_{c} représente une chaine hydrocarbonée, saturée ou insaturée, cyclique ou acyclique, linéaire ou ramifiée, comprenant de 1 à 20 atomes de carbone, de préférence de 6 à 14 atomes de carbone, R_{d} représente un groupe divalent alkylène, linéaire ou ramifié, ayant de 2 à 4 atomes de carbones, et de préférence un groupe divalent propylène ;
et de leurs mélanges.

De préférence, l'allophanate de formule (Y) susmentionnée est tel que p, q, R_{c} et R_{d} sont choisis tel que le dérivé d'allophanate de HDI ci-dessus comprend une teneur en groupe isocyanate NCO allant de 12 à 14% en poids par rapport au poids dudit dérivé.

Selon un mode de réalisation, le(s) polyisocyanate(s) utilisable(s) sont des triisocyanate(s), de préférence choisi(s) parmi les isocyanurates, les biurets, et les adduits de diisocyanates et de triols.

En particulier, le(s) isocyanurate(s) peuvent être utilisé(s) sous la forme d'un mélange technique de (poly)isocyanurate(s) de pureté supérieure ou égale à 70% en poids isocyanurate(s).

De préférence, le(s) isocyanurate(s) de diisocyanate utilisable(s) selon l'invention répond(ent) à la formule générale (W) suivante : 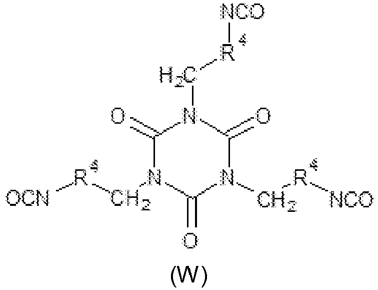 dans laquelle :
R⁴ représente un groupe alkylène, linéaire ou ramifié, cyclique, aliphatique, arylaliphatique ou aromatique, comprenant de 4 à 9 atomes de carbones,
sous réserve que les groupes NCO ne soient pas reliés par une liaison covalente à un atome de carbone faisant parti d'un cycle hydrocarboné aromatique tel qu'un groupe phényle.

A titre d'exemple de trimères de diisocyanates utilisables selon l'invention, on peut citer :
- le trimère isocyanurate d'hexaméthylène diisocyanate (HDI) : 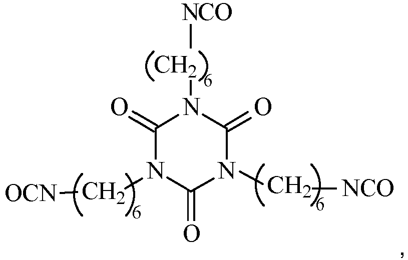
- le trimère isocyanurate d'isophorone diisocyanate (IPDI) : 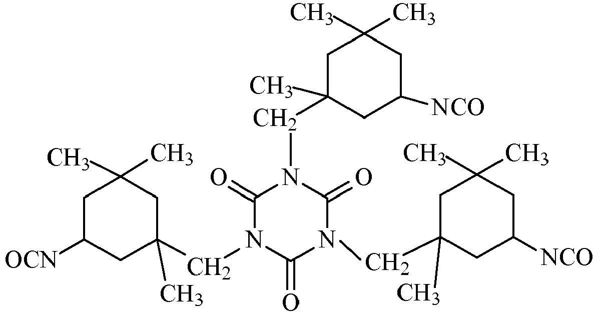
- le trimère isocyanurate de pentaméthylène diisocyanate (PDI) : 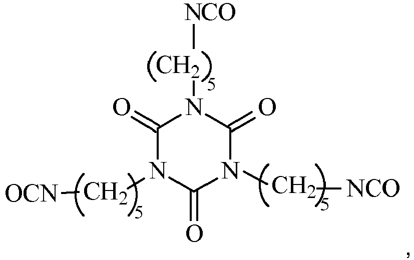
- le trimère isocyanurate du méta-xylylène diisocyanate (m-XDI) : 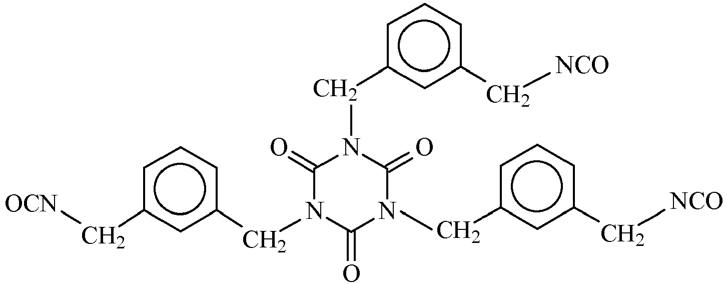
- le trimère isocyanurate du m-XDI, sous forme hydrogénée :

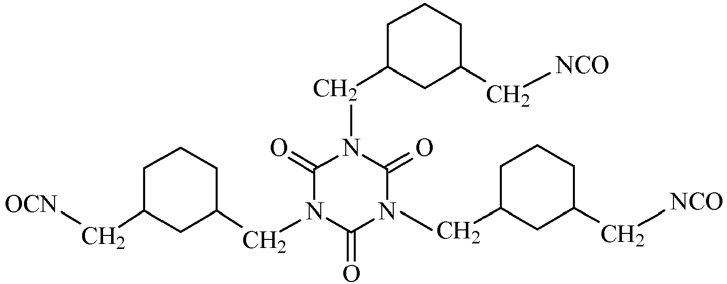

A titre d'exemple d'adduits de diisocyanates et de triols utilisables selon l'invention, on peut citer l'adduit de méta-xylylène diisocyanate et de triméthylolpropane, tel que représenté ci-dessous. Cet adduit est commercialisé par exemple par la société MITSUI CHEMICALS, Inc sous la dénomination « TAKENATE^{®} D-110N ».

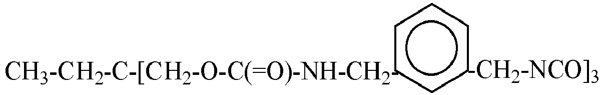

Le(s) polyisocyanate(s) utilisable(s) pour préparer le polyuréthane utilisé selon l'invention sont largement disponibles dans le commerce. A titre d'exemple, on peut citer le « SCURANATE@ TX » commercialisé par la société VENCOREX, correspondant à un 2,4-TDI de pureté de l'ordre de 95%, le « SCURANATE@ T100 » commercialisé par la société VENCOREX, correspondant à un 2,4-TDI de pureté supérieure à 99% en poids, le « DESMODUR^{®} I » commercialisé par la société COVESTRO, correspondant à un IPDI ou encore le « DESMODURO N3300 » commercialisé par la société COVESTRO, correspondant à un isocyanurate de HDI, le « TAKENATE ^{™} 500 » commercialisé par MITSUI CHEMICALS correspondant à un m-XDI, le « TAKENATE ^{™} 600 » commercialisé par MITSUI CHEMICALS correspondant à un m-H6XDI, le « VESTANAT^{®} H12MDI » commercialisé par EVONIK correspondant à un H12MDI.

De préférence, le(s) polyisocyanate(s) est(sont) choisi(s) parmi le toluène diisocyanate (en particulier l'isomère 2,4 TDI, l'isomère 2,6-TDI ou leurs mélanges), le méta-xylylène, l'isocyanurate de HDI, et leurs mélanges.

Les polyisocyanates susmentionnés peuvent également être utilisés dans l'étape E'1) susmentionnée.

### Conditions réactionnelles

La réaction de polyaddition de l'étape E1) et la réaction de l'étape E'1) peuvent être mises en oeuvre à une température de préférence inférieure à 95°C et/ou dans des conditions de préférence anhydres.

La réaction de polyaddition de l'étape E1) et la réaction de l'étape E'1) peuvent être mises en oeuvre en présence ou non d'au moins un catalyseur de réaction.

Le(s) catalyseur(s) de réaction utilisable(s) au cours de la réaction de polyaddition de l'étape E1) et la réaction de l'étape E'1) peu(ven)t être tout catalyseur connu de l'homme du métier pour catalyser la formation de polyuréthane par réaction d'au moins un polyisocyanate avec au moins un polyol.

Une quantité allant jusque 0,3% en poids de catalyseur(s) par rapport au poids du milieu réactionnel de l'étape E1) ou E'1) peut être utilisée. En particulier, on préfère utiliser de 0,02% à 0,2% en poids de catalyseur(s) par rapport au poids du milieu réactionnel de l'étape E1) ou E'1).

### Etape E2) et E'2)

En présence d'ester d'acide acrylique, la réaction de transestérification de l'étape E'2) peut être mise en oeuvre à une température supérieure à 110°C, de préférence supérieure à 120°C.

Parmi les esters d'acide acrylique, on peut par exemple citer l'acrylate de méthyle, l'acrylate de butyle, l'acrylate de propyle, l'acrylate de pentyle.

En présence de chlorure d'acide acrylique, la réaction de l'étape E'2) peut être mise en oeuvre à une température de préférence inférieure à 95°C, dans des conditions de préférence anhydres.

En présence d'ester(s) hydroxylé(s) de l'acide acrylique, ou d'amide(s) hydroxylée(s) de l'acide acrylique ou de chlorure d'acide acrylique, la réaction de l'étape E2) peut être mise en oeuvre à une température de préférence inférieure à 95°C, dans des conditions de préférence anhydres.

Les esters hydroxylés de l'acide acrylique peuvent être mis en oeuvre soit purs, soit sous la forme d'un mélange de différents esters hydroxylés de l'acide acrylique ayant un indice hydroxyle moyen dudit mélange allant de 56 à 483 mg KOH/g dudit mélange.

Les amides hydroxylés de l'acide acrylique peuvent être mis en oeuvre soit purs, soit sous la forme d'un mélange de différentes amides hydroxylées de l'acide acrylique ayant un indice hydroxyle moyen dudit mélange allant de 56 à 487 mg KOH/g dudit mélange.

L'étape E2) est de préférence réalisée avec au moins un ester hydroxylé de l'acide acrylique de formule (II) susmentionnée, de préférence de formules (II-1) ou (II-2) ou (II-3) susmentionnées, et en particulier de formule (II-1-1) ou (II-1-2) susmentionnées, avantageusement de formule (II-1-1) susmentionnée.

La composition A peut comprendre en outre au moins un solvant, de préférence en une quantité allant de 10% à 50% en poids, plus préférentiellement allant de 15% à 40% en poids, et mieux encore allant de 20 à 30% en poids, par rapport au poids total de la composition A.

Le solvant peut être choisi parmi les solvants organiques et alcooliques tels que l'acétate d'éthyle, la méthyl éthyl cétone, le xylène, l'éthanol, l'isopropanol, le tétrahydrofurane, le méthyl-tétrahydrofurane, ou encore parmi l' « ISANEO » (à base d'isoparaffines, disponible auprès de la société TOTAL) ou l' « EXXOL^{®} D80 » (à base d'hydrocarbures aliphatiques, disponible auprès de la société EXXON MOBIL CHEMICAL).

Selon un mode de réalisation, la composition A possède une viscosité mesurée à température ambiante (23°C) allant de 500 à 10 000 mPa.s, de préférence allant de 1 000 à 5 000 mPa.s.

Le polyuréthane comprenant au moins deux fonctions terminales -NCO présente de préférence de 0,1 à 1,5 milliéquivalent par gramme de fonctions T de formule (I) susmentionnée par gramme dudit polyuréthane, plus préférentiellement de 0,4 à 1,2 milliéquivalent de fonctions T par gramme dudit polyuréthane, et avantageusement de 0,4 à 1,0 milliéquivalent de fonctions T par gramme dudit polyuréthane.

Selon un mode de réalisation préféré, le polyuréthane susmentionné comprend au moins deux fonctions terminales T' de formule (I') suivante : 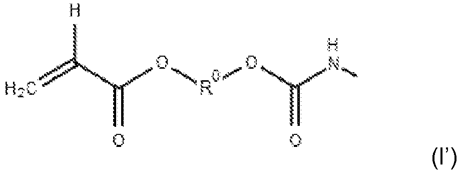 dans laquelle R⁰ est tel que défini précédemment, R⁰ représentant de préférence -CH₂CH₂- ou -CH₂-CH(Me)-.

### Composition B

La composition B comprend au moins une polyamine B1 et au moins une polyamine B2.

Il va de soi dans la présente invention que la polyamine B1 et la polyamine B2 de la composition B sont différentes.

La composition B peut comprendre :
- une polyamine B1 et une polyamine B2 ;
- un mélange de polyamines B1 et une polyamine B2 ;
- une polyamine B1 et un mélange de polyamines B2 ;
- un mélange de polyamines B1 et un mélange de polyamines B2.

### Polyamine B1

La polyamine B1 comprend uniquement deux groupements -CH₂-NH₂, de préférence à chaque extrémité.

Ainsi, la polyamine B1 ne comprend pas d'autres groupements -CH₂-NH₂ que les deux susmentionnés. En revanche, la polyamine B1 peut comprendre d'autres groupements/radicaux organiques (différents de -CH₂-NH₂).

La polyamine B1 peut comprendre plusieurs fonctions amine, dont uniquement deux groupes -CH₂NH₂.

Selon un mode de réalisation, la polyamine B1 a la formule (III) suivante :

NH₂-CH₂-Z-CH₂₋NH₂ (III)

dans laquelle Z représente un radical hydrocarboné divalent, linéaire ou ramifié, cyclique, aliphatique ou aromatique, saturé ou insaturé, comprenant de préférence de 1 à 22 atomes de carbone, ledit radical hydrocarboné étant éventuellement interrompu par un ou plusieurs hétéroatomes choisis parmi -S-, -O- et/ou un ou plusieurs groupes divalents amine tertiaire -NR^{‴}- avec R^{‴} représentant un groupe alkyle linéaire ou ramifié, saturé ou insaturé, comprenant 1 à 22 atomes de carbone, de préférence de 1 à 18, de préférence de 1 à 14, préférentiellement de 1 à 10 et avantageusement de 1 à 6 atomes de carbone.

De préférence, la polyamine B1 répond à l'une des formules (III-1), (III-2) ou (III-3) ci-dessous :

H₂N-CH₂-R⁴-CH₂-NH₂ (III-1)

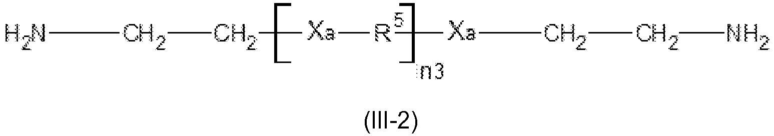

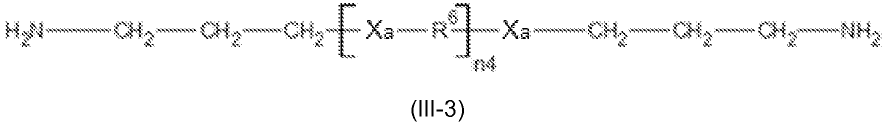

dans lesquelles :
- R⁴ est un radical divalent alkylène linéaire ou ramifié, ou un radical divalent arylène, comprenant de 1 à 18 atomes de carbones, R⁴ représentant de préférence un radical alkylène linéaire comprenant 6, 10 ou 12 atomes de carbone ;
- R⁵ représente un radical divalent alkylène linéaire ou ramifié comprenant de 2 à 12 atomes de carbone, préférentiellement éthylène ou propylène,
- R⁶ représente un radical divalent alkylène linéaire ou ramifié comprenant de 2 à 10 atomes de carbone, préférentiellement éthylène ou propylène,
- Xₐ = O, S, NR⁷ dans lequel R⁷ représente H ou un groupe alkyle linéaire ou ramifié, saturé ou insaturé, comprenant de 1 à 10 atomes de carbone, préférentiellement 1 à 4 atomes de carbones, X représentant de préférence O ;
- n₃ est un nombre entier allant de 0 à 4, et avantageusement étant égal à 1 ou 2 ;
- n₄ est un nombre entier allant de 0 à 2, et avantageusement étant égal à 1.

La polyamine B1 est de préférence une polyamine de formule (III-2) ci-dessus, dans laquelle Xₐ représente de préférence O, et n₃ vaut de préférence 1.

Selon un mode de réalisation, la polyamine B1 a une alcalinité primaire supérieure ou égale à 7 méq/g, de préférence supérieure ou égale à 10 méq/g, préférentiellement supérieure ou égale à 13 méq/g.

Selon un mode de réalisation, la polyamine B1 a une alcalinité primaire comprise entre 7 et 34 méq/g, de préférence comprise entre 9 et 34 méq/g, et avantageusement comprise entre 10 et 20 méq/g.

De préférence, la polyamine B1 est choisie parmi la diéthylènetriamine (DETA) : H₂N-CH₂-CH₂-NH-CH₂-CH₂-NH₂, la 1,10-décanediamine : H₂N-(CH₂)₁₀-NH₂, la 1,12 dodécanediamine : H₂N-(CH₂)₁₂-NH₂, la 1,6-hexamétylènediamine (HMDA), les polyétherdiamines de formules H₂N-CH₂-CH₂-O-CH₂-CH₂-O-CH₂-CH₂-NH₂ et H₂N-CH₂-CH₂-CH₂-O-CH₂-CH₂-O-CH₂-CH₂-CH₂-NH₂ (disponible par exemple respectivement sous les dénominations commerciales « JEFFAMINEO EDR 148 » et « JEFFAMINEO EDR 176 » auprès de la société HUNTSMAN).

### Polyamine B2

La composition B comprend au moins une polyamine B2 comprenant au moins deux fonctions amine primaire -NH₂.

Selon un mode de réalisation, la polyamine B2 ou le mélange de polyamines B2 présente une alcalinité primaire strictement inférieure à 10,00 méq/g, de préférence comprise entre 3,0 et moins de 10,00 méq/g.

Selon un mode de réalisation, la polyamine B2 est choisi dans le groupe constitué des polyétheramines, des polyamidoamines, des amines grasses dimères ou trimères, des polyéthylèneimines (PEI), des polyéthylèneimines dendrimères, des polypropylèneimines (PPI), des polypropylèneimines dendrimères, des polyallylamines, des poly(propylène-éthylène)imines, et de leurs mélanges, ladite polyamine ayant de préférence une alcalinité primaire strictement inférieure à 10,00 méq/g, de préférence comprise entre 3,0 et moins de 10,00 méq/g.

Selon un mode de réalisation préféré, la polyamine B2 comprend au moins deux groupements -CHR⁸-NH₂ (de préférence de 2 à 6 groupements) avec R⁸ représentant H ou un radical alkyle comprenant de préférence de 1 à 4 atomes de carbone, R⁸ étant de préférence H ou méthyle.

Selon un mode de réalisation, la polyamine B2 est choisie parmi les polyétheramines, en particulier choisie parmi :
- les polyétherdiamines telles que par exemple :
   ∘ les polyétherdiamines répondant à la formule ci-dessous : 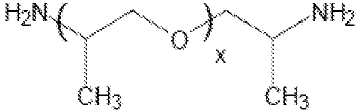 dans laquelle x est un nombre entier tel que l'alcalinité primaire de la polyétherdiamine soit comprise entre 0,5 et moins de 10 méq/g, de préférence x allant de 2 à 68 (de telles polyétherdiamines sont par exemple commercialisées sous la dénomination JEFFAMINES D-230, D-400, D-2000 et D-4000 par la société HUNTSMAN et présentent des alcalinités primaires respectives de 8,7, 5,0, 1,0 et 0,5 méq/g) ;
   ∘ les polyétherdiamines répondant à la formule ci-dessous : 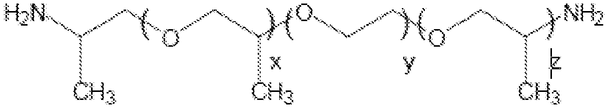 dans laquelle x, y et z sont des nombres entiers tel que l'alcalinité primaire soit comprise entre 1 et moins de 10 méq/g, de préférence y allant de 2 à 39 et x + z allant de 1 à 6 (de telles polyéther diamines sont commercialisées par exemple sous la dénomination JEFFAMINES HK-511, ED-600, ED-900 et ED-2003 par la société HUNTSMAN et présentent des alcalinités primaires respectives de 9,1, 3,3, 2,2 et 1,0 méq/g) ;
   ∘ les polyétherdiamines répondant à la formule suivante :

      H₂N-X_{b}(-O-X_{b})ₘ₋₁-O-(CH₂-CH₂-CH₂-CH₂-O)ₙ-(X_{b}-O)ₘ₋₁-X_{b}-NH₂

      dans laquelle X_{b} est un groupe alkylène linéaire ou ramifié, comprenant de préférence de 2 à 20 atomes de carbone, de préférence de 2 à 10 atomes de carbone, m est un entier allant de 1 à 20, et n est un entier allant de 1 à 100, m et n étant de préférence tel que l'alcalinité primaire des polyétherdiamines est strictement inférieure à 10 méq/g ;
- les polyéthertriamines telles que par exemple celles répondant répondant à la formule ci-dessous : 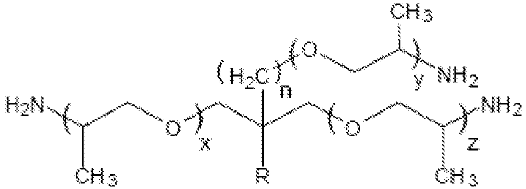 dans laquelle R est un atome d'hydrogène ou un groupe alkyle en C1 à C2, x, y, z et n sont des nombres entiers, tel que l'alcalinité primaire de la polyéthertriamine est comprise entre 0,5 et moins de 10 méq/g, de préférence n allant de 0 à 1 et x + y + z allant de 5 à 85 (de telles polyéthertriamines sont commercialisées par exemple sous la dénomination JEFFAMINES T-403, T-3000, et T-5000 par la société HUNTSMAN et présentent des alcalinités primaires respectives de 6,8, 1,0 et 0,6 méq/g).

Selon un autre mode de réalisation, la polyamine B2 est choisie parmi les amines grasses dimères et trimères comportant deux ou trois groupes amines primaire d'alcalinité primaire allant de 3,28 méq/g à 5,20 méq/g. Ces amines grasses dimères et trimères peuvent être obtenues à partir d'acides gras dimérisés et trimérisés correspondants. A titre d'exemple de telles amines grasses dimères partiellement ou totalement hydrogénées, on peut citer celles répondant aux formules suivantes :

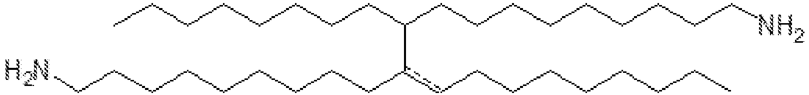

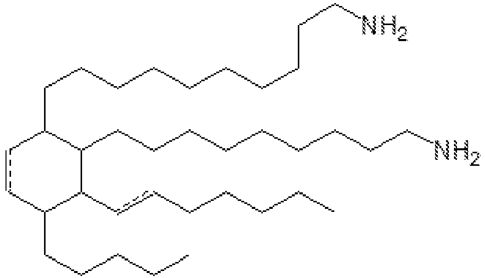

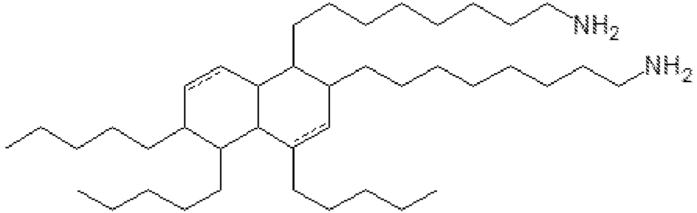

Les acides gras dimères et trimères utilisés pour préparer les amines grasses suscitées peuvent être obtenus par polymérisation à haute température et sous pression d'acides gras insaturés monocarboxyliques (acide monomère), comprenant de 6 à 22 atomes de carbone, de préférence de 12 à 20 atomes de carbone, et proviennent de sources végétales ou animales. On peut citer comme exemple de tels acides gras insaturés, les acides en C₁₈ ayant une ou deux doubles liaisons (respectivement l'acide oléïque ou linoléïque) obtenus à partir de tallol qui est un sous-produit de la fabrication de la pâte à papier. Après polymérisation de ces acides gras insaturés, on obtient notamment un mélange technique contenant en moyenne 30-35 % en poids d'acides gras monocarboxyliques souvent isomérisés par rapport aux acides gras insaturés monocarboxyliques de départ, 60-65 % en poids d'acides dicarboxyliques (acides dimères) comprenant le double du nombre de carbone par rapport aux acides gras insaturés monocarboxyliques de départ et 5-10 % en poids d'acides tricarboxyliques (acides trimères) ayant le triple du nombre de carbone par rapport aux acides gras insaturés monocarboxyliques de départ. Par purification de ce mélange, on obtient notamment les différents grades commerciaux d'acides dimères, monomères ou trimères. Ces acides gras dimères et trimères sont ensuite typiquement soumis à une réaction d'ammoniation réductrice (NH₃/H₂) en présence d'un catalyseur, permettant d'obtenir les amines grasses dimérisées.

Selon un autre mode de réalisation, la polyamine B2 est choisie parmi les polyéthylèneimines (PEI), de préférence ayant une masse moléculaire moyenne en nombre (Mn) allant de 450 à 25 000 g/mol et un rapport alcalinité primaire/alcalinité totale allant de 0,35 à 0,45, et ayant en particulier au moins un radical de formule suivante :

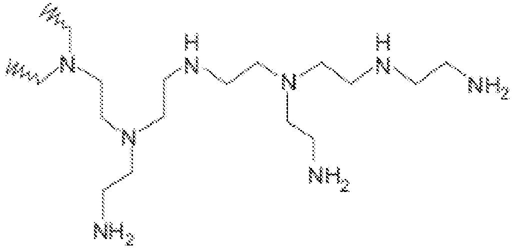

On peut par exemple citer les polyéthylèneimines commercialisées sous la dénomination « LUPASOL » commercialisées par BASF, tel que le « LUPASOL FG » de Mn = 800 g/mol avec un rapport molaire amine primaire/amine secondaire/amine tertiaire = 1,0/0,9/0,5 déterminés par RMN ¹³C, une alcalinité primaire calculée = 9,75 méq/g et un rapport alcalinité primaire/alcalinité totale = 0,42.

De préférence, la polyamine B2 est choisie parmi les polyétheramines, les polyéthylèneimines (PEI) telles que définies ci-dessus, et leurs mélanges.

Selon un mode de réalisation, la composition B présente un rapport alcalinité primaire/alcalinité totale allant de 0,25 à 1,00.

Le ratio massique polyamine(s) B1/polyamine(s) B2 dans la composition B peut aller de 90/10 à 10/90, de préférence de 80/20 à 20/80, préférentiellement de 30/70 à 70/30, encore plus préférentiellement de 60/40 à 40/60, et mieux encore est d'environ 50/50.

La composition B peut être préparée par simple mélange des constituants, de préférence à une température allant de 10°C à 50°C, de préférence à température ambiante, de préférence à l'aide d'un mélangeur mécanique avant ou sans ajout de solvant.

### Composition

Selon un mode de réalisation de l'invention, le ratio molaire (NH₂ + NH) / fonctions T (noté r5) au sein de la composition va de 0,2 à 1,5, de préférence de 0,4 à 1,2, préférentiellement de 0,5 à 1,1.

Le ratio molaire (r5) est le ratio molaire de la somme du nombre des fonctions amine primaire (NH₂) et du nombre des fonctions amine secondaire (NH) sur les fonctions T.

De préférence, la composition selon l'invention est une composition adhésive.

Selon un mode de réalisation de l'invention, le ratio massique A/B entre la composition A et la composition B, au sein de la composition, va de 100/1 à 100/50, de préférence 100/2 à 100/30, préférentiellement de 100/2 à 100/10, et encore plus avantageusement de 100/2 à 100/5.

La composition selon l'invention peut comprendre au moins un catalyseur de réticulation. Le catalyseur de réticulation peut être présent dans la composition A et/ou dans la composition B, de préférence dans la composition A.

Le(s) catalyseur(s) de réticulation peu(ven)t être n'importe quel catalyseur habituellement utilisé(s) pour accélérer la réaction d'addition d'un composé comportant une amine primaire sur un composé comportant un groupe acrylate.

Selon un mode de réalisation, le catalyseur est choisi dans le groupe constitué des bases de Lewis et des bases de Brönstedt dont les acides conjugués ont un pKa ≥ 10, les hydroxydes (tel que par exemple LiOH, NaOH, ou KOH), les hydrures (tel que par exemple NaH, KH, ou CaH₂), les carbonates (tel que par exemple CaCOs, Na₂CO₃, ou K₂CO₃), les alcoolates de métaux alcalins (tel que par exemple le méthylate de sodium, le méthylate de potassium, l'éthylate de sodium, le tertio-butylate de potassium, le tétraisopropylate de titane), et leurs mélanges.

Les bases de Lewis et des bases de Brönstedt dont les acides conjugués ont un pKa ≥ 10 peuvent être typiquement celles décrites dans Houben-Weyl, vol. XI/1, (1957), page 277 ff. et dans Patai, "The Chemistry of the Amino Group, pp 61-65, Interscience, New York (1968).

De préférence, les bases de Lewis sont choisis dans le groupe constitué des amines cycloaliphatiques, tel que le 1,4-diazabicyclo[2.2.2]octane (DABCO) ou l'éther diéthylique-2,2'-morpholine (DMDEE) ; des amines tertiaires aliphatiques telles que par exemple la triéthylamine, la tripropylamine, la tributylamine, la N-méthyldiéthanolamine, la N-méthyldiisopropylamine ou la N-butyldiéthanolamine ; des amidines tel que par exemple le 1,5-diazabicyclo[4.3.0]non-5-ène (DBN), le 1,8-diazabicyclo[5.4.0]undec-7-ène (DBU) ; des guanidines telles que par exemple la N,N,N',N'-tétraméthylguanidine, le 1,5,7-triazabicyclo[4.4.0]dec-5-ène (TBD) ou le N-méthyl triazabicyclodécène (Me-TBD) ; des copolymères de 2,3,4-vinylpyridine ou d'acrylates aminés tel que le 2-diméthylaminoéthyl acrylate, le 2-diéthylaminoéthyl acrylate ou le 3-diméthylaminopropyl acrylate ; des phosphazènes tels que par exemple le 2-tert-butylimino-2-diéthylamino-1,3-diméthylperhydro-1,3,2-diazaphosphorure (BMEP) ; des alkyl ou aryl phosphanes alkyl tels que par exemple le tributylphosphane, le triphénylphosphane, le tris-p-tolylphosphane, le méthyldiphénylphosphane ; des hydroxy et amino phosphanes ; des résines basiques échangeuses d'ions ; et de leurs mélanges.

Parmi les bases de Lewis particulièrement préférées selon l'invention, on peut citer:
- les guanidines telles que par exemple :
   le 1,5,7-triazabicyclo[4.4.0]dec-5-ene (TBD) : 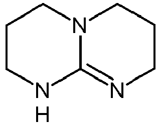
   le N-méthyl triazabicyclodécène (Me-TBD) : 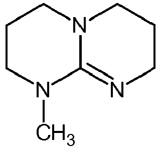
- les amidines telles que par exemple :
   le 1,8-diazabicyclo[5.4.0]undec-7-ène (DBU) : 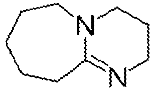
   le 1,5-diazabicyclo[4.3.0]non-5-ène (DBN) : 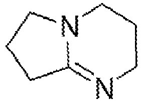
- les amines tertiaires telles que par exemple:
   le 2,2'-dimorpholinodiéthyléther (DMDEE) : 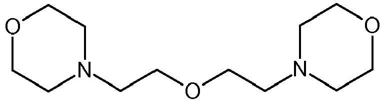
   le 1,4-diazabicyclo[2.2.2]octane (DABCO) :

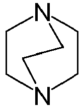

Une quantité allant de 0,05 à 5% en poids, préférentiellement de 0,1 à 3% en poids de catalyseur(s) de réticulation par rapport au poids total de la composition selon l'invention peut être ajoutée.

Le(s) catalyseur(s) de réticulation peu(ven)t être réparti(s) dans une ou plusieurs des compositions (par exemple dans la composition A et/ou dans la composition B définies ci-dessus) formant la composition selon l'invention, préférentiellement dans la composition B.

La composition selon l'invention peut comprendre en outre au moins une charge minérale, de préférence en une quantité ne dépassant pas 70% en poids du poids de la composition. La ou les charges peut/peuvent être présente(s) dans la composition A et/ou dans la composition B.

La (ou les) charge(s) minérale(s) utilisable(s) est (sont) avantageusement choisie(s) de manière à améliorer les performances mécaniques de la composition selon l'invention à l'état réticulée.

A titre d'exemple de charge(s) utilisable(s), on peut citer de manière non limitative le carbonate de calcium, le kaolin, la silice, le gypse, les microsphères et les argiles.

De préférence, la (ou les) charge(s) minérale(s) possède(nt) une taille de particule maximale, notamment un diamètre externe, inférieur(e) à 100 µm et de préférence inférieur(e) à 10 µm. De telles charges peuvent être sélectionnées de manière bien connue par l'homme du métier en utilisant des tamis de mailles appropriées.

La composition selon l'invention peut en outre comprendre au moins un promoteur d'adhésion, de préférence choisi parmi les silanes, les aminosilanes ou les acryloyl silanes. Le ou les promoteurs d'adhésion peut/peuvent être présente(s) dans la composition A et/ou dans la composition B, de préférence dans la composition A.

La composition selon l'invention peut inclure moins de 2% en poids d'un ou plusieurs additifs avantageusement choisis de manière appropriée pour ne pas détériorer les propriétés de la composition adhésive selon l'invention, à l'état réticulé. On peut citer par exemples parmi les additifs utilisables des antioxydants ou stabilisants UV (ultra-violet), des pigments, et des colorants. Ces additifs sont de préférence choisis parmi ceux habituellement utilisés dans des compositions adhésives.

Le(s) additif(s) peu(ven)t être réparti(s) dans un ou plusieurs des compositions formant la composition selon l'invention.

### B. Kit prêt à l'emploi

La présente invention concerne également un kit prêt à l'emploi, comprenant la composition A telle que définie ci-dessus d'une part et la composition B telle que définie ci-dessus d'autre part, conditionnées dans deux compartiments séparés.

En effet, la composition selon l'invention peut se trouver sous une forme bi-composante, par exemple au sein d'un kit prêt à l'emploi, comprenant la composition A d'une part dans un premier compartiment ou fût et la composition B d'autre part dans un second compartiment ou fût, dans des proportions adaptées pour un mélange direct des deux compositions, par exemple à l'aide d'une pompe doseuse.

Selon un mode de réalisation de l'invention, le kit comprend en outre un ou plusieurs moyens permettant le mélange des deux compositions A et B. De préférence, les moyens de mélange sont choisis parmi des pompes doseuses, des mélangeurs statiques de diamètre adapté aux quantités utilisées.

### C. Structure multicouche (complexe)

La présente invention a également pour objet une structure multicouche (complexe) comprenant au moins deux couches de matériau liées entre elles par une couche adhésive, caractérisé en ce que ladite couche adhésive est constituée par la composition selon l'invention, à l'état réticulé.

La couche adhésive présente de préférence une épaisseur allant de 1,5 à 5 µm.

La couche adhésive peut être obtenue par réticulation de la composition selon l'invention, à raison d'une quantité de préférence allant de 1,5 à 5 g/m².

Les matériaux dont sont constituées les couches de matériau entourant la couche adhésive sont généralement choisis parmi le papier, un métal, comme par exemple l'aluminium ou les polymères thermoplastiques tels que :
- le polyéthylène (PE),
- le polypropylène (PP),
- un copolymère à base d'éthylène et de propylène,
- le polyamide (PA),
- le polyéthylènetéréphtalate (PET), ou encore
- un copolymère à base d'éthylène comme par exemple un copolymère greffé anhydride maléïque, un copolymère d'éthylène et d'acétate de vinyle (EVA), un copolymère

d'éthylène et d'alcool vinylique (EVOH), un copolymère d'éthylène et d'un acrylate d'alkyle tel que l'acrylate de méthyle (EMA) ou de butyle (EBA),
- le polystyrène (PS),
- le polychlorure de vinyle (PVC),
- le polyfluorure de vinylidène (PVDF),
- un polymère ou copolymère d'acide lactique (PLA), ou
- un polyhydroxyalkanoate (PHA).

Une couche individuelle de matériau peut être elle-même constituée de plusieurs matériaux. Il peut s'agir par exemple d'une couche de polymères thermoplastiques obtenue par coextrusion de deux polymères (il n'y alors pas de colle entre les couches coextrudées), les couches individuelles de polymère thermoplastique peuvent être en outre enduites d'une substance (par exemple à base d'oxyde d'aluminium ou d'oxyde de silicium) ou métallisée (cas du PET métallisé avec des particules d'aluminium) pour ajouter un effet barrière supplémentaire.

L'épaisseur des 2 couches de matériau adjacentes à la couche adhésive et des autres couches de matériau mises en oeuvre dans la structure multicouche selon l'invention peut être susceptible de varier dans un large domaine allant par exemple de 5 à 150 µm. L'épaisseur totale de ladite structure peut être susceptible de varier également dans un large domaine allant par exemple de 20 à 400 µm.

De préférence, la structure multicouche se présente sous la forme d'un film multicouche.

### D. Procédé de complexage

L'invention a également pour objet un procédé de fabrication de la structure multicouche (complexe) selon l'invention comprenant les étapes suivantes :
- le mélange de la composition A et de la composition B, puis
- l'enduction dudit mélange sur la surface d'une première couche, puis
- le contrecollage de la surface d'une deuxième couche sur ladite surface enduite, puis
- la réticulation dudit mélange.

L'étape de mélange de la composition A et de la composition B peut être réalisée à température ambiante ou à chaud, avant enduction.

De préférence, le mélange est réalisé à une température inférieure à la température de dégradation des ingrédients compris dans l'une ou l'autre des compositions (A) et (B). En particulier, le mélange est réalisé à une température inférieure à 95°C, de préférence allant de 15 à 80°C, de préférence encore allant de 25°C à 50°C, afin d'éviter toute dégradation thermique.

Selon un mode de réalisation de l'invention, le ratio molaire NH₂ + NH / fonctions T (noté r5) au sein de la composition va de 0,2 à 1,5, de préférence de 0,4 à 1,2, préférentiellement de 0,5 à 1,1.

Selon un mode de réalisation, lorsqu'un solvant est présent dans les compositions A et/ou B et/ou lorsqu'un solvant est ajouté lors du mélange de la composition A et de la composition B, alors le procédé de complexage comprend une étape d'évaporation du ou des solvants, ladite étape d'évaporation de solvant(s) est alors effectuée avant réticulation du mélange, de préférence avant l'étape de contrecollage.

L'enduction dudit mélange peut être réalisée sur tout ou partie de la surface d'un matériau. En particulier, l'enduction dudit mélange peut être réalisée sous la forme d'une couche d'épaisseur allant de 1,5 à 5 µm. L'enduction est réalisée de préférence de manière continue ou substantiellement continue.

Eventuellement, la réticulation dudit mélange sur la surface du matériau peut-être accélérée en chauffant le(s) matériau(x) enduit(s) à une température inférieure ou égale à 70°C. Le temps requis pour compléter cette réaction de réticulation et assurer ainsi le niveau de cohésion requis est en général de l'ordre de 0,5 à 24 heures.

L'enduction et le contrecollage du second matériau sont généralement effectués dans un intervalle de temps compatible avec le procédé d'enduction, comme il est bien connu de l'homme du métier, c'est-à-dire avant que la couche d'adhésif perde sa capacité à fixer par collage les deux matériaux.

### E. Utilisation de la structure multicouche

L'invention concerne également l'utilisation de la structure multicouche (complexe) selon l'invention pour la fabrication d'emballages flexibles. Les complexes selon l'invention sont en effet utilisables pour la fabrication d'emballages flexibles les plus divers, qui sont mis en forme puis fermés (après l'étape de conditionnement du produit destiné au consommateur) par des techniques de thermoscellage (ou thermosoudage).

En particulier, le complexe selon l'invention peut être utilisé dans l'emballage alimentaire, sans risque de toxicité. Les emballages à destination alimentaire sont généralement traités thermiquement à des températures allant de 60°C à 135°C avant utilisation. En particulier, ils peuvent être pasteurisés (à des températures allant de 90°C à 95°C) ou stérilisés (à des températures allant de 128°C à 135°C).

La structure multicouche selon l'invention présente avantageusement une très bonne tenue thermique, en particulier vis-à-vis du test de stérilisation ou de pasteurisation. En particulier, la structure multicouche est avantageusement adaptée à à la fabrication d'emballages flexibles destinés au conditionnement de produits alimentaires.

Tous les modes de réalisation décrits ci-dessus peuvent être combinés les uns avec les autres. En particulier, les différents constituants susmentionnés de la composition, et notamment les modes préférés, de la composition peuvent être combinés les uns avec les autres.

Dans le cadre de l'invention, par « comprise entre x et y », ou « allant de x à y », on entend un intervalle dans lequel les bornes x et y sont incluses. Par exemple, la gamme «comprise entre 0% et 25% » inclus notamment les valeurs 0% et 25%.

L'invention est à présent décrite dans les exemples de réalisation suivants qui sont donnés à titre purement illustratif, et ne sauraient être interprétés pour en limiter la portée.

### EXEMPLES

Les ingrédients suivants ont été utilisés :

### Composition A

- VORANOL@ P 400 : polypropylène glycol difonctionnel présentant un indice hydroxyle IOH allant de 250 à 270 mg KOH/g (disponible auprès de la société DOW) ;
- VORANOL@ CP 450 : polypropylène glycol trifonctionnel présentant un indice hydroxyle IOH allant de 370 à 396 mg KOH/g (disponible auprès de la société DOW) ;
- DEKATOL^{®} 3008 : polyester polyol difonctionnel présentant un indice hydroxyle IOH allant de 102 à 110 mg KOH/g (disponible auprès de la société BOSTIK) ;
- SCURANATE^{®} TX : toluène diisocyanate (TDI) présentant 48,1% en poids de fonctions NCO et comprenant 95% en poids d'isomère 2,4-TDI (disponible auprès de la société Vencorex) ;
- 2-hydroxyéthyl acrylate (HEA) : carbonate de glycérol présentant une pureté de 98,5% en poids et contenant 250 ± 50 ppm de MEHQ (disponible auprès de la société BASF) ;
- Acétate d'éthyle : solvant
- BORCHI KAT^{®} 315 : catalyseur à base de néodécanoate de bismuth (disponible auprès de la société Borchers) ;

Le(s) polyol(s) a(ont) séché(s) avant d'être mis en réaction avec le(s) polyisocyanate(s) utilisé(s) pour la synthèse du polyuréthane à terminaisons NCO.

### Composition B

- JEFFAMINE^{®} D-230 (disponible auprès de la société Huntsman) : diamine (de type B2) répondant à la formule H₂N-(CHMe-CH₂-O-)ₙ-CH₂-CHMe-NH₂, présentant une masse molaire de 230 g/mol, une alcalinité primaire et totale de 8,70 méq/g et un rapport alcalinité primaire/alcalinité totale de 1,00 déterminé par potentiométrie ;
- JEFFAMINE^{®} EDR-148 (disponible auprès de la société Huntsman) : diamine (de type B1) répondant à la formule H₂N-CH₂-CH₂-O-CH₂-CH₂-O-CH₂-CH₂-NH₂ présentant une masse molaire de 148 g/mol, une alcalinité primaire et totale de 13,50 méq/g et un rapport alcalinité primaire/alcalinité totale de 1,00 déterminé par potentiométrie ;
- LUPASOL^{®} FG (disponible auprès de la société BASF) : polyamine (de type B2) de type polyéthylènimine (PEI) présentant une masse molaire de 800 g/mol, une somme de l'alcalinité primaire et de l'alcalinité secondaire étant de 19,0 méq/g, un rapport alcalinité primaire / alcalinité totale de 0,42, et une alcalinité secondaire / alcalinité totale de 0,38 déterminées par RMN ¹³C, soit un rapport de la somme de l'alcalinité primaire et de l'alcalinité secondaire / alcalinité totale de 0,79.

### Exemple 1 : Préparation d'une composition A-1 à base d'un polyuréthane à terminaisons T à base de polyéther polyols et de polyester polyols

On introduit dans un réacteur 191,8 g de SCURANATE@ TX et chauffe à 40°C. On introduit ensuite tour à tour 22,8 g de VORANOL@ CP 450, puis 104,5 g de VORANOL@ P 400 en veillant à ce que la température du mélange ne dépasse pas 80°C. Lorsque la température de mélange est stabilisée, on chauffe le mélange pendant environ 1 heure à 80-85°C puis on refroidit à 70°C. On introduit ensuite 323,5 g de DEKATOL^{®} 3008 en veillant à ce que la température du mélange ne dépasse pas 90°C.

Le mélange est maintenu environ 3 heures à 90°C. La fin de la réaction est suivie en contrôlant le pourcentage massique de fonctions NCO dans le milieu, ce dernier devant être en théorie d'environ 5,9 % en poids. Lorsque la réaction est terminée, on refroidit le mélange à 70°C et on introduit 107,0 g de 2-hydroxyéthyl acrylate et 0,5 g de BORCHI KAT^{®} 315. On ajoute 100 g d'acétate d'éthyle puis le mélange est maintenu à 70°C pendant 6 à 8 heures jusqu'à ce qu'il n'y ait plus de fonction NCO visibles à l'Infra-Rouge (IR) (disparition de la bande caractéristique de la fonction NCO à environ 2250 cm⁻¹).

Lorsque le pourcentage massique de fonctions NCO est inférieur à 0,1% (plus de bande NCO visible), on introduit 150 g d'acétate d'éthyle. On mesure à J+1, soit 24 heures après la fin de la réaction (disparition de la bande NCO visibles à l'IR), la viscosité de la composition A-1 ainsi obtenue, à l'aide d'un viscosimètre Brookfield (aiguille 3, 20 tr/mn). La viscosité de la composition A-1 à 23°C est d'environ 1 200 mPa.s.

La teneur en fonction T du polyuréthane à terminaisons T est de 0,92 méq/g environ pour un extrait sec de 75 %.

Exemple 2 : Préparation d'une composition A-2 à base d'un polyuréthane à terminaisons T

### à base de polyéther polyols et de polyester polyols

On introduit dans un réacteur 153,0 g de de SCURANATE@ TX et chauffe à 40°C.

On introduit lentement 85,2 g de VORANOL@ P 400 et on chauffe le mélange à 50°C. La masse réactionnelle monte en exotherme jusqu'à environ 70°C. Une fois l'exotherme maîtrisé, on maintient le mélange à 70°C. Au bout d'une heure de réaction, on introduit 393,0 g de DEKATOL^{®} 3008. La masse réactionnelle monte en exotherme jusqu'à environ 85°C. Le mélange est maintenu environ 2-3 heures à 85°C. La fin de la réaction est suivie en contrôlant le pourcentage massique de fonctions NCO dans le milieu, ce dernier devant être en théorie d'environ 3,8 % en poids. Lorsque la réaction est terminée, on refroidit le mélange à 70°C et on introduit 100 g d'acétate d'éthyle. On homogénéise le mélange pendant 20 minutes puis on ajoute 68 g de 2-hydroxyéthyl acrylate. On ajoute 0,4 g de BORCHI KAT^{®} 315, puis le mélange est maintenu à 80-85°C pendant 3 heures jusqu'à ce qu'il n'y ait plus de fonction NCO visibles à l'IR (disparition de la bande caractéristique de la fonction NCO à environ 2250 cm⁻¹).

Lorsque le pourcentage massique de fonction NCO est inférieur à 0,1% (plus de bande NCO visible), on introduit 200 g d'acétate d'éthyle. On mesure à J+1, soit 24 heures après la fin de la réaction (disparition de la bande NCO visibles à l'IR), la viscosité de la composition A-2 ainsi obtenue, à l'aide d'un viscosimètre Brookfield (aiguille 3, 20 tr/mn). La viscosité de la composition A-2 à 23°C est d'environ 5400 mPa.s.

La teneur en fonction T du polyuréthane à terminaisons T est de 0,59 méq/g environ pour un extrait sec de 70,0 %.

### Exemple 3 : Préparation des compositions B

Les compositions B qui ont été testées ont été préparées par simple mélange de la (des) polyamine(s) B1 et/ou de la (des) polyamine B2 à une température ambiante (environ 23°C) dans un rapport pondéral B1/B2 indiqué ci-dessous dans le tableau 1.

### Exemple 4 : Préparation des compositions adhésives

Le mélange des compositions A et B détaillées aux exemples 1 à 3 a été effectué dans un rapport pondéral A/B indiqué ci-dessous dans le tableau 1.

Les compositions 1 à 4 ont été préparées soit à partir de la composition A de l'exemple 1 (A-1) soit à partir de la composition A de l'exemple 2 (A-2).

La composition 2 (comparative), a été préparée à partir d'une composition B comprenant une seule polyamine B1 (composition 2).

Les compositions 1, 3, et 4 selon l'invention ont été préparées respectivement, à partir d'une même composition B comprenant une polyamine B1 et une polyamine B2.

**Tableau 1 : caractéristique des compositions adhésives testées**

| | Nature de A | Composition de B | Ratio B1/B2 | B1 | B1 + B2 | Ratio A/B | Ratio molaire r5 |
|---|---|---|---|---|---|---|---|
| | | | | Alcalinité NH₂ (méq/g) | Alcalinité NH₂ + NH (méq/g) | | |
| Composition 1 | A-1 (exemple 1) | JEFFAMINE^{®} EDR-148 (B1)/LUPASOL^{®} FG (B2) | 8/2 | | 14,60 | 100/3,6 | 0,57 |
| Composition 2 (comparative) | A-1 (exemple 1) | JEFFAMINE^{®} EDR-148 (B1) | - | 13,50 | | 100/3,4 | 0,50 |
| Composition 3 | A-1 (exemple 1) | JEFFAMINE^{®} EDR-148 (B1)/LUPASOL^{®} FG (B2) | 7/3 | | 15.15 | 100/3,7 | 0,61 |
| Composition 4 | A-2 (exemple 2) | JEFFAMINE^{®} EDR-148 (B1)/LUPASOL^{®} FG (B2) | 1/1 | | 16,25 | 100/4,0 | 1,10 |

Le ratio molaire r5 représente le rapport molaire du nombre de fonctions amine primaire -NH₂ et secondaire -NH- sur le nombre de fonctions T telle que définie précédemment présentes dans la composition adhésive (A+B).

### Exemple 5 : Préparation des complexes

- Préparation des supports : les couches de matériau sont découpées au format désiré et agrafés sur une fiche Bristol.
- Préparation de la composition adhésive : la composition A et la composition B sont mélangées dans un flacon en verre, avec un éventuel ajout d'acétate d'éthyle. Dans ce dernier cas, l'extrait sec de la composition adhésive est d'environ 30% en poids pour avoir un grammage de l'ordre de 2 à 5 g/m² pour chacune des interfaces entre deux subtrats.
- Réalisation de la structure multicouche (complexe) :
   ▪ On applique la colle sur une couche aluminium renforcé avec du PolyEthylène Téréphtalate (PET) à l'aide d'un applicateur avec une barre de Mayer,
   ▪ On met des pinces pour maintenir le support sur le Bristol du coté non agrafé et on place le support dans une étuve ventilée 2 minutes à 105°C pour évaporer le solvant,
   ▪ On agrafe ensemble sur un bord le support encollé et le support à contrecoller. On enlève les pinces et contrecolle à l'aide d'un rouleur presseur,
   ▪ On place le complexe sous une presse et le laisse réticuler soit à température ambiante (23°C) soit dans une étuve ventilée à 40°C sous une presse (plaques métalliques).

Différents complexes ont été préparés en utilisant un système bicouches BOPA/PE50 défini ci-après, chaque couche étant séparée par une couche adhésive telle que détaillée dans le tableau 2 ci-dessous :

**Tableau 2 : caractéristique des complexes**

| | Composition adhésive | grammage (g/m2) |
|---|---|---|
| Film 1 | Composition 1 | 4,2 |
| Film 2 | Composition 2 (comparative) | 4,8 |
| Film 3 | Composition 3 | 4,5 |
| Film 4 | Composition 4 | 3,0 |

BOPA15 / PE50 : système constitué d'une couche polyamide orienté biaxialement de 15 µm d'épaisseur (BOPA15) et d'une couche de polyéthylène de 50 µm d'épaisseur (PE50). PETALU / CPP : système constitué d'une couche de polyester contrercollé sur une couche aluminium et d'une couche de polypropylène moulé et légèrement orienté dans le sens de la machine (le CPP peut être scellé et plus résistant que le BOPP)

### Exemple 6 : Mesure de la cohésion des complexes de l'exemple 5 avant et après essai de pasteurisation et appréciation qualitative de la résistance desdits complexes à la pasteurisation

### Pe/age à 180° (mesure de la cohésion):

La cohésion du complexe est évaluée par le test de pelage à 180° tel que décrit dans la norme française NF T 54-122 (octobre 1976). Le principe de ce test consiste en la détermination de la force nécessaire à la séparation (ou pelage) de 2 couches individuelles de complexe liées par l'adhésif.

Une éprouvette de forme rectangulaire de 15 mm de large et d'environ 15 cm de long est découpée dans le complexe bicouche. La découpe des éprouvettes se fait dans le sens machine de l'enduction. On décolle manuellement à partir de l'extrémité de cette éprouvette, et sur environ 2 cm, les 2 couches individuelles de complexe comprises dans cette bande et les 2 extrémités libres ainsi obtenues sont fixées sur deux dispositifs d'attache reliés, respectivement, à une partie fixe et une partie mobile d'un appareil de traction qui sont situées sur un axe vertical.

Alors qu'un mécanisme d'entraînement communique à la partie mobile une vitesse uniforme de 100 mm/minute, conduisant au décollement des 2 couches dont les extrémités décollées se déplacent progressivement selon un axe vertical en formant un angle de 180°, la partie fixe -reliée à un dynamomètre ZWICK mesure la force supportée par l'éprouvette ainsi maintenue, et mesurée en Newton (N).

Chaque test est répété 3 fois et la valeur moyenne des trois mesures est indiquée dans le tableau 3 ci-dessous.

La mesure de la cohésion avant pasteurisation a été effectuée 7 jours après la fabrication du film multicouche (J+7).

Comme illustré dans le tableau 3 ci-dessous, la cohésion a également été mesurée 24 heures après pasteurisation.

### Appréciation qualitative de la résistance à la pasteurisation et à la stérilisation :

On a également évalué la qualité de l'adhésion entre les couches de matériau des structures multicouches testées, après pasteurisation ou stérilisation.

En particulier, on a noté la présence ou non de boursouflures, pouvant être de formes diverses (par exemple des canaux ou cloques) ou bulles. La présence de ces déformations de la structure multicouche traduit l'infiltration d'eau entre les couches de la structure multicouche résultant de la dégradation de l'adhésif au cours de la pasteurisation ou de la stérilisation.

En outre, on a vérifié si l'adhésif s'est déréticulé au cours de la pasteurisation. Pour cela, après avoir réalisé le test de pelage décrit plus haut sur chacun des films testés, on a évalué la présence ou non de tack (pouvoir collant) en exerçant une légère pression de l'index sur la surface de la couche de colle laissée apparente après séparation des couches de matériau.

Les observations ont été consignées dans les tableaux 3 et 4 ci-dessous.

### Test de pasteurisation / Test de stérilisation

Dans le présent exemple, le test de pasteurisation a été effectué une fois l'adhésif réticulé au sein du complexe (environ 7 jours après préparation du complexe conformément à l'exemple 5). Des sachets ont été préparés à partir d'un complexe préparé à l'exemple 5, sans sceller le quatrième côté. Les sachets sont placés sur la grille d'un autoclave (phase vapeur) et laissés 30 minutes à 90°C.

Dans le présent exemple, le test de stérilisation a été effectué une fois l'adhésif réticulé au sein du complexe (environ 7 jours après préparation du complexe conformément à l'exemple 5). Des sachets ont été préparés à partir d'un complexe préparé à l'exemple 5, sans sceller le quatrième côté. Les sachets sont placés sur la grille d'un autoclave (phase vapeur) et laissés 1 heure à 130°C.

Dans le tableau 3 ci-dessous :
- lorsqu'il est observé « pas de tack », alors le film passe le test de stérilisation (respectivement pasteurisation),
- lorsqu'il est observé un « tack », alors le film ne passe pas le test de pasteurisation (respectivement pasteurisation),
- lorsqu'il est observé des canaux, alors le film ne passe pas le test de stérilisation (respectivement pasteurisation).
- lorsqu'il est observé une déchirure, alors le film passe le test de stérilisation (respectivement pasteurisation).

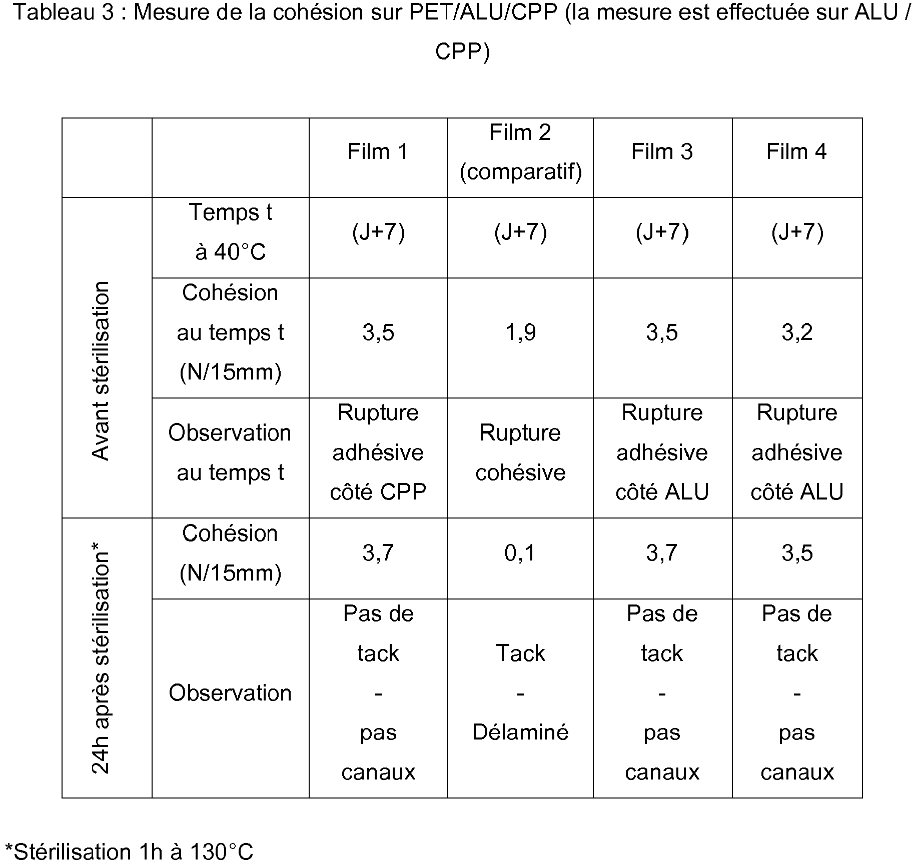

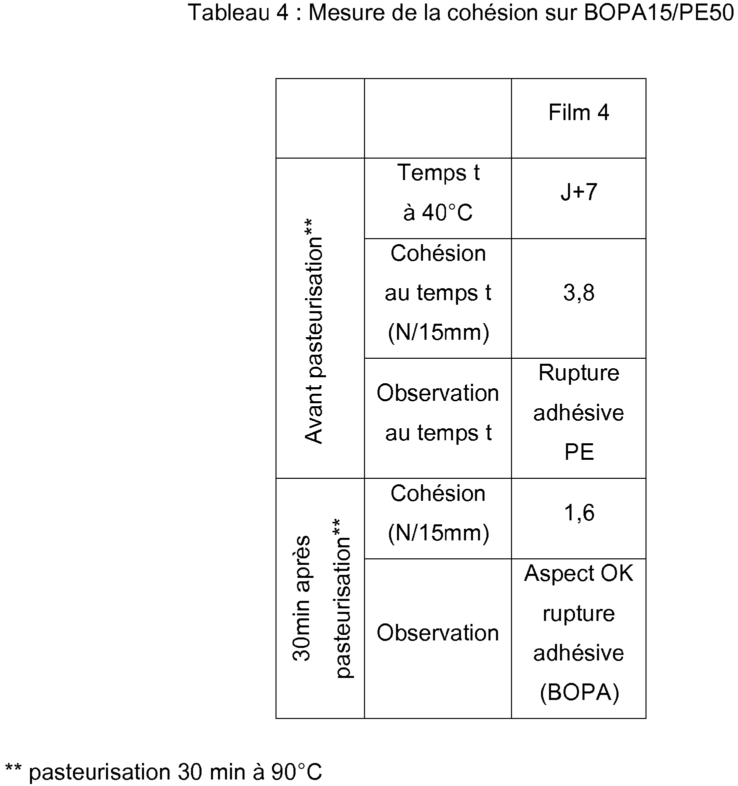

## Revendications

1. Composition, de préférence adhésive, comprenant :
- une composition A comprenant au moins un polyuréthane comprenant au moins deux fonctions terminales acryliques T de formule (I) suivante :
CH₂=CH-C(=O)-X- (I)
avec X représentant -O- ou -NRₐ- avec Rₐ représentant H ou un radical alkyle comprenant de 1 à 22 atomes de carbone, de préférence de 1 à 14 atomes de carbone, X représentant de préférence -O- ;
et
- une composition B comprenant :
∘ au moins une polyamine B1 comprenant uniquement deux groupes -CH₂NH₂ ; et
∘ au moins une polyamine B2 comprenant au moins deux fonctions amine primaire -NH₂.

2. Composition selon la revendication 2, dans laquelle le polyuréthane comprenant au moins deux fonctions terminales T est obtenu par réaction :
- d'un polyuréthane comprenant au moins deux fonctions terminales -NCO, et d'au moins composé choisi parmi : un ester hydroxylé de l'acide acrylique ou une amide hydroxylée de l'acide acrylique ; ou
- d'un polyuréthane comprenant au moins deux fonctions terminales -OH, et d'au moins un composé choisi parmi un chlorure de l'acide acrylique ou un ester de l'acide acrylique.

3. Composition selon l'une quelconque des revendications 1 ou 2, dans laquelle le polyuréthane comprenant au moins deux fonctions terminales T est préparé par un procédé comprenant les étapes suivantes:
- E1) la préparation d'un polyuréthane à terminaisons NCO par une réaction de polyaddition :
i) d'au moins un polyisocyanate, de préférence choisi parmi les diisocyanates, les triisocyanates, et leurs mélanges ;
ii) avec au moins un polyol, de préférence choisi parmi les polyester polyols, les polyéther polyols, les polyène polyols, les polycarbonate polyols, les poly(éther-carbonate) polyols, les polymères à terminaisons -OH, et leurs mélanges ;
dans des quantités telles que le rapport molaire NCO/OH (r3) est strictement supérieur à 1, de préférence va de 1,3 à 2,0, et préférentiellement va de 1,5 à 1,7 ;
et
- E2) la réaction du produit formé à l'issue de l'étape E1) avec au moins un ester hydroxylé de l'acide acrylique ou au moins une amide hydroxylée de l'acide acrylique, dans des quantités telles que le rapport molaire OH/NCO (r4) est inférieur ou égal à 1, de préférence va de entre 0,90 à 1,00, et préférentiellement va de 0,95 à 1,00.

4. Composition selon l'une quelconque des revendications 1 à 3, dans laquelle l'ester hydroxylé de l'acide acrylique a la formule (II) suivante :
CH₂=CH-C(=O)-O-R⁰-OH (II)
dans laquelle R° représente un radical hydrocarboné divalent linéaire ou ramifié, aliphatique ou cyclique, saturé ou insaturé, comprenant de préférence de 2 à 240 atomes de carbone, et étant éventuellement interrompu par un ou plusieurs hétéroatomes (tel que par exemple N, O, S, et en particulier O), et/ou éventuellement interrompu par un ou plusieurs groupes aromatiques, et/ou éventuellement interrompu par un ou plusieurs groupes divalents -N(R_{b})- avec R_{b} représentant un radical alkyle linéaire ou ramifié comprenant de 1 à 22 atomes de carbone (amine tertiaires), -C(=O)O- (ester), -C(=O)NH- (amide), -NHC(=O)O-(carbamate), -NHC(=O)-NH- (urée), ou -C(=O)- (carbonyle), et/ou étant éventuellement substitué.

5. Composition selon l'une quelconque des revendications 1 à 4, dans laquelle l'ester hydroxylé de l'acide acrylique a l'une des formules suivantes :
• Formule (II-1) :
CH₂=CH-C(=O)-O-R¹-OH (II-1)
dans laquelle R¹ représente un radical alkylène divalent linéaire ou ramifié, aliphatique ou cyclique, saturé ou insaturé, comprenant de 2 à 22 atomes de carbone, de préférence de 2 à 18, de préférence de 2 à 14, préférentiellement de 2 à 10, et avantageusement de 2 à 6 atomes de carbone ;
• Formule (II-2) :
CH₂=CH-C(=O)-O-R²-O-[C(=O)-(CH₂)ᵣ-O]ₛ-H (II-2)
dans laquelle :
- r est un nombre entier allant de 1 à 10, de préférence de 1 à 5, et préférentiellement r est égal à 5 ;
- s est un nombre entier allant de 1 à 10, s étant de préférence égal à 2 ;
- R² représente un radical alkylène divalent linéaire ou ramifié, aliphatique ou cyclique, saturé ou insaturé, comprenant de 2 à 22 atomes de carbone, de préférence de 2 à 18, de préférence de 2 à 14, préférentiellement de 2 à 10, et avantageusement de 2 à 6 atomes de carbone ;
• Formule (II-3) :
CH₂=CH-C(=O)-O-[R³-O]ₜ-H (II-3)
dans laquelle R³ représente un radical alkylène divalent linéaire ou ramifié, aliphatique ou cyclique, saturé ou insaturé, comprenant de 2 à 4 atomes de carbone, t est un nombre entier allant de 2 à 120, de préférence de 1 à 10, t étant de préférence égal à 2 ou 3.
ledit ester hydroxylé de l'acide acrylique ayant de préférence l'une des formules (II-1-1) ou (II-1-2) suivantes :
-
CH₂=CH-C(=O)-O-CH₂-CH₂-OH (II-1-1)
: 2-hydroxyéthylacrylate (HEA)
-
CH₂=CH-C(=O)-O-CH₂-CH(Me)-OH (II-1-2):
2-hydroxypropylacrylate (HPA).

6. Composition selon l'une quelconque des revendications 1 à 4, dans laquelle l'amide hydroxylée de l'acide acrylique a la formule (II') suivante :
CH₂=CH-C(=O)-N(Rₐ)-R'⁰-OH (II')
dans laquelle Rₐ est tel que défini ci-dessus, et R'⁰ représente un radical hydrocarboné divalent linéaire ou ramifié, aliphatique ou cyclique, saturé ou insaturé, comprenant de préférence de 1 à 240 atomes de carbone, et étant éventuellement interrompu par un ou plusieurs hétéroatomes (tel que par exemple N, O, S, et en particulier O), et/ou éventuellement interrompu par un ou plusieurs groupes aromatiques, et/ou éventuellement interrompu par un ou plusieurs groupes divalents -N(R_{b})- avec R_{b} étant tel que défini ci-dessus (amine tertiaires), -COO- (ester), - C(=O)NH- (amide), -NHC(=O)O- (carbamate), -NHC(=O)-NH- (urée), ou -C(=O)-(carbonyle), et/ou étant éventuellement substitué.

7. Composition selon l'une quelconque des revendications 4 à 6, dans laquelle le(s) polyisocyanate(s) sont choisis parmi les diisocyanates et les triisocyanates,
- les diisocyanates étant de préférence choisis dans le groupe constitué de l'isophorone diisocyanate (IPDI), de l'hexaméthylène diisocyanate (HDI), de l'heptane diisocyanate, de l'octane diisocyanate, du nonane diisocyanate, du décane diisocyanate, de l'undécane diisocyanate, du dodécane diisocyanate, du 4,4'-méthylènebis(cyclohexylisocyanate) (4,4'-HMDI), du norbornane diisocyanate, du norbornène diisocyanate, du 1,4-cyclohexane diisocyanate (CHDI), du méthylcyclohexane diisocyanate, de l'éthylcyclohexane diisocyanate, du propylcyclohexane diisocyanate, du méthyldiéthylcyclohexane diisocyanate, du cyclohexane diméthylène diisocyanate, du 1,5-diisocyanato-2-méthylpentane (MPDI), du 1,6-diisocyanato-2,4,4-triméthylhexane, du 1,6-diisocyanato-2,2,4-triméthylhexane (TMDI), du 4-isocyanatométhyl-1,8-octane diisocyanate (TIN), du (2,5)-bis(isocyanatométhyl)bicyclo[2.2.1]heptane (2,5-NBDI), du (2,6)-bis(isocyanatométhyl)bicyclo[2.2.1]heptane (2,6-NBDI), du 1,3-bis(isocyanatomethyl)cyclohexane (1,3-H6-XDI), du 1,4-bis(isocyanatomethyl)-cyclohexane (1,4-H6-XDI), du xylylène-diisocyanate (XDI) (en particulier le m-xylylène diisocyanate (m-XDI)), du toluène diisocyanate (en particulier le 2,4-toluène diisocyanate (2,4-TDI) et/ou le 2,6-toluène diisocyanate (2,6-TDI)), du diphénylméthane diisocyanate (en particulier le 4,4'-diphénylméthane diisocyanate (4,4'-MDI) et/ou le 2,4'-diphénylméthane diisocyanate (2,4'-MDI)), du tétraméthylxylylène diisocyanate (TMXDI) (en particulier le tétraméthyl (méta)xylylène diisocyanate), d'un allophanate de HDI ayant par exemple la formule (Y) suivante : 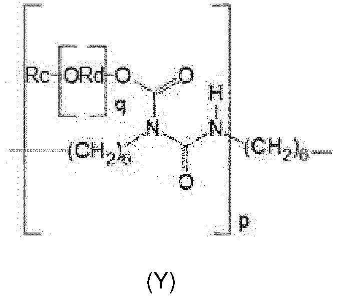 dans laquelle p est un nombre entier allant de 1 à 2, q est un nombre entier allant de 0 à 9, et de préférence 2 à 5, R_{c} représente une chaine hydrocarbonée, saturée ou insaturée, cyclique ou acyclique, linéaire ou ramifiée, comprenant de 1 à 20 atomes de carbone, de préférence de 6 à 14 atomes de carbone, R_{d} représente un groupe divalent alkylène, linéaire ou ramifié, ayant de 2 à 4 atomes de carbones, et de préférence un groupe divalent propylène ;
et de leurs mélanges ;
- les triisocyanates étant de préférence choisis parmi les isocyanurates, les biurets, et les adduits de diisocyanates et de triols.

8. Composition selon l'une quelconque des revendications 4 à 7, dans laquelle :
- le(s) polyisocyanate(s) est(sont) choisi(s) parmi le toluène diisocyanate (en particulier l'isomère 2,4 TDI, l'isomère 2,6-TDI ou leurs mélanges), le méta-xylylène, l'isocyanurate de HDI, et leurs mélanges ; et/ou
- l'étape E1) est réalisée en présence d'un mélange de polyols, comprenant de préférence au moins un, préférentiellement au moins deux, polyéther polyol et/ou au moins un polyester, avantageusement le mélange de polyols comprend un polyéther diol et un polyéther triol, et un polyester diol.

9. Composition selon l'une quelconque des revendications 1 à 8, dans laquelle la polyamine B1 a la formule (III) suivante :
NH₂-CH₂-Z-CH₂₋NH₂ (III)
dans laquelle Z représente un radical hydrocarboné divalent, linéaire ou ramifié, cyclique, aliphatique ou aromatique, saturé ou insaturé, comprenant de préférence de 1 à 22 atomes de carbone, ledit radical hydrocarboné étant éventuellement interrompu par un ou plusieurs hétéroatomes choisis parmi -S-, -O- et/ou un ou plusieurs groupes divalents amine tertiaire -NR^{‴}- avec R^{‴} représentant un groupe alkyle linéaire ou ramifié, saturé ou insaturé, comprenant 1 à 22 atomes de carbone, de préférence de 1 à 18, de préférence de 1 à 14, préférentiellement de 1 à 10 et avantageusement de 1 à 6 atomes de carbone ;
la polyamine B1 ayant de préférence l'une des formules (III-1), (III-2) ou (III-3) ci-dessous :
H₂N-CH₂-R⁴-CH₂-NH₂ (III-1) 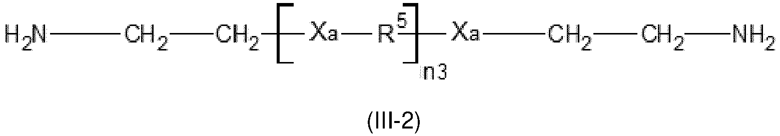 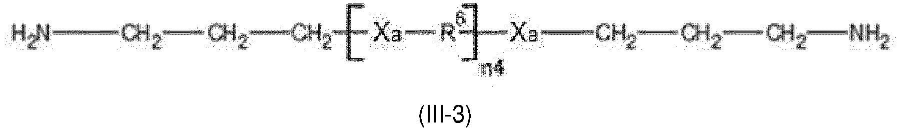
dans lesquelles :
- R⁴ est un radical divalent alkylène linéaire ou ramifié, ou un radical divalent arylène, comprenant de 1 à 18 atomes de carbones, R⁴ représentant de préférence un radical alkylène linéaire comprenant 6, 10 ou 12 atomes de carbone ;
- R⁵ représente un radical divalent alkylène linéaire ou ramifié comprenant de 2 à 12 atomes de carbone, préférentiellement éthylène ou propylène,
- R⁶ représente un radical divalent alkylène linéaire ou ramifié comprenant de 2 à 10 atomes de carbone, préférentiellement éthylène ou propylène,
- Xₐ = O, S, NR⁷ dans lequel R⁷ représente H ou un groupe alkyle linéaire ou ramifié, saturé ou insaturé, comprenant de 1 à 10 atomes de carbone, préférentiellement 1 à 4 atomes de carbones, X représentant de préférence O ;
- n₃ est un nombre entier allant de 0 à 4, et avantageusement étant égal à 1 ou 2 ;
- n₄ est un nombre entier allant de 0 à 2, et avantageusement étant égal à 1.

10. Composition selon l'une quelconque des revendications 1 à 9, dans laquelle la polyamine B1 a une alcalinité primaire supérieure ou égale à 7 méq/g, de préférence supérieure ou égale à 10 méq/g, préférentiellement supérieure ou égale à 13 méq/g.

11. Composition selon l'une quelconque des revendications 1 à 10, dans laquelle la polyamine B2 ou le mélange de polyamines B2 présente une alcalinité primaire strictement inférieure à 10,00 méq/g, de préférence comprise entre 3,0 et moins de 10,00 méq/g.

12. Composition selon l'une quelconque des revendications 1 à 11, dans laquelle la polyamine B2 est choisie parmi:
- les polyétherdiamines telles que par exemple :
∘ les polyétherdiamines répondant à la formule ci-dessous : 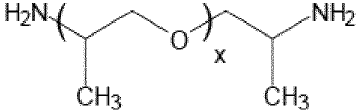 dans laquelle x est un nombre entier tel que l'alcalinité primaire de la polyétherdiamine soit comprise entre 0,5 et moins de 10 méq/g, de préférence x allant de 2 à 68 ;
∘ les polyétherdiamines répondant à la formule ci-dessous : 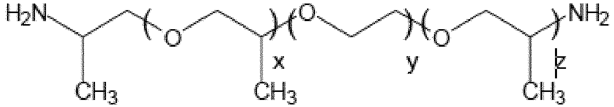 dans laquelle x, y et z sont des nombres entiers tel que l'alcalinité primaire soit comprise entre 1 et moins de 10 méq/g, de préférence y allant de 2 à 39 et x + z allant de 1 à 6 ;
∘ les polyétherdiamines répondant à la formule suivante :
H₂N-X_{b}(-O-X_{b})ₘ₋₁-O-(CH₂-CH₂-CH₂-CH₂-O)ₙ-(X_{b}-O)ₘ₋₁-X_{b}-NH₂
dans laquelle X_{b} est un groupe alkylène linéaire ou ramifié, comprenant de préférence de 2 à 20 atomes de carbone, de préférence de 2 à 10 atomes de carbone, m est un entier allant de 1 à 20, et n est un entier allant de 1 à 100 ;
- les polyéthertriamines telles que par exemple celles répondant à la formule ci-dessous : 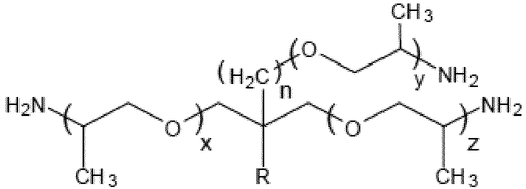 dans laquelle R est un atome d'hydrogène ou un groupe alkyle en C1 à C2, x, y, z et n sont des nombres entiers, tel que l'alcalinité primaire de la polyéthertriamine est comprise entre 0,5 et moins de 10 méq/g, de préférence n allant de 0 à 1 et x + y + z allant de 5 à 85.

13. Composition selon l'une quelconque des revendications 1 à 12, dans laquelle la polyamine B2 est choisie parmi les polyéthylèneimines (PEI), de préférence ayant une masse moléculaire moyenne en nombre (Mn) allant de 450 à 25 000 g/mol et un rapport alcalinité primaire/alcalinité totale allant de 0,35 à 0,45, et ayant en particulier au moins un radical de formule suivante :

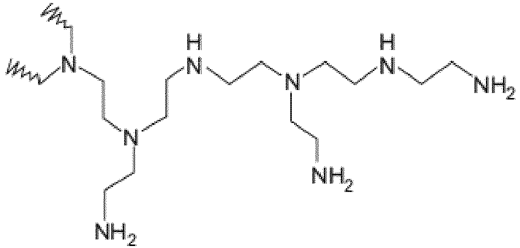

14. Structure multicouches comprenant au moins deux couches de matériau liées entre elles par une couche adhésive, **caractérisé en ce que** ladite couche adhésive est constituée par la composition selon l'une quelconque des revendications 1 à 13, à l'état réticulé, la couche adhésive présentant de préférence une épaisseur allant de 1,5 à 5 µm.

15. Procédé de fabrication d'une structure multicouche selon la revendication 14, comprenant les étapes suivantes :
- le mélange de la composition A et de la composition B, puis
- l'enduction dudit mélange sur la surface d'une première couche de matériau, puis
- le contrecollage de la surface d'une deuxième couche de matériau sur ladite surface enduite, puis
- la réticulation dudit mélange.

## Patentansprüche

1. Zusammensetzung, vorzugsweise Klebstoffzusammensetzung, umfassend:
- eine Zusammensetzung A, umfassend mindestens ein Polyurethan mit mindestens zwei endständigen Acrylfunktionen T der folgenden Formel (I):
CH₂=CH-C(=O)-X- (I),
wobei X für -O- oder -NRₐ- steht, wobei Rₐ für H oder einen Alkylrest mit 1 bis 22 Kohlenstoffatomen, vorzugsweise 1 bis 14 Kohlenstoffatomen steht, wobei X vorzugsweise für -O-steht;
und
- eine Zusammensetzung B, umfassend:
∘ mindestens ein Polyamin B1 mit nur zwei Gruppen -CH₂NH₂ und
∘ mindestens ein Polyamin B2 mit mindestens zwei primären Aminfunktionen -NH₂.

2. Zusammensetzung nach Anspruch 2, wobei das Polyurethan mit mindestens zwei endständigen Funktionen T erhalten wird durch Umsetzung:
- von einem Polyurethan mit mindestens zwei endständigen -NCO-Funktionen und mindestens einer Verbindung, die aus einem hydroxylierten Acrylsäureester oder einem hydroxylierten Acrylsäureamid ausgewählt ist; oder
- von einem Polyurethan mit mindestens zwei endständigen -OH-Funktionen und mindestens einer Verbindung, die aus einem Acrylsäurechlorid oder einem Acrylsäureester ausgewählt ist.

3. Zusammensetzung nach einem der Ansprüche 1 oder 2, wobei das Polyurethan mit mindestens zwei endständigen Funktionen T durch ein Verfahren hergestellt wird, das die folgenden Schritte umfasst:
- E1) Herstellung eines Polyurethans mit NCO-Endgruppen durch eine Polyadditionsreaktion:
i) von mindestens einem Polyisocyanat, das vorzugsweise aus Diisocyanaten, Triisocyanaten und Mischungen davon ausgewählt wird;
ii) mit mindestens einem Polyol, das vorzugsweise aus Polyesterpolyolen, Polyetherpolyolen, Polyenpolyolen, Polycarbonatpolyolen, Poly(ether-carbonat)polyolen, Polymeren mit -OH-Endgruppen und Mischungen davon ausgewählt wird;
in solchen Mengen, dass das NCO/OH-Molverhältnis (M3) streng über 1, bevorzugt im Bereich von 1,3 bis 2,0 und vorzugsweise im Bereich von 1,5 bis 1,7 liegt;
und
- E2) die Umsetzung des am Ende von Schritt E1) gebildeten Produkts mit mindestens einem hydroxylierten Acrylsäureester oder mindestens einem hydroxylierten Acrylsäureamid in solchen Mengen, dass das OH/NCO-Verhältnis (M4) kleiner als oder gleich 1 ist, bevorzugt im Bereich zwischen 0,90 bis 1,00 und vorzugsweise im Bereich zwischen 0,95 bis 1,00 liegt.

4. Zusammensetzung nach einem der Ansprüche 1 bis 3, wobei der hydroxylierte Acrylsäureester die folgende Formel (II) aufweist:
CH₂=CH-C(=O)-O-R⁰-OH (II),
in der R° für einen linearen oder verzweigten, aliphatischen oder cyclischen, gesättigten oder ungesättigten zweiwertigen Kohlenwasserstoffrest steht, der vorzugsweise 2 bis 240 Kohlenstoffatome umfasst und gegebenenfalls durch ein oder mehrere Heteroatome (wie beispielsweise N, O, S und insbesondere O) unterbrochen ist und/oder gegebenenfalls durch eine oder mehrere aromatische Gruppen unterbrochen ist und/oder gegebenenfalls durch eine oder mehrere zweiwertige Gruppen -N(R_{b})-, wobei R_{b} für einen linearen oder verzweigten Alkylrest mit 1 bis 22 Kohlenstoffatomen (tertiäres Amin), -C(=O)O- (Ester), -C(=O)NH-(Amid), -NHC(=O)O- (Carbamat), -NHC(=O)NH-(Harnstoff) oder -C(=O)- (Carbonyl) unterbrochen ist und/oder gegebenenfalls substituiert ist.

5. Zusammensetzung nach einem der Ansprüche 1 bis 4, wobei der hydroxylierte Acrylsäureester eine der folgenden Formeln aufweist:
• Formel (II-1):
CH₂=CH-C(=O)-O-R¹OH (II-1),
in der R¹ für einen linearen oder verzweigten, aliphatischen oder cyclischen, gesättigten oder ungesättigten zweiwertigen Alkylenrest mit 2 bis 22 Kohlenstoffatomen, bevorzugt 2 bis 18, bevorzugt 2 bis 14, vorzugsweise 2 bis 10 und vorteilhafterweise 2 bis 6 Kohlenstoffatomen steht;
• Formel (II-2) :
CH₂=CH-C(=O)-O-R²-O-[C(=O)-(CH₂)ᵣ-O]ₛ-H (II-2),
in der:
- r eine ganze Zahl im Bereich von 1 bis 10, bevorzugt von 1 bis 5, ist, wobei r vorzugsweise gleich 5 ist;
- s eine ganze Zahl im Bereich von 1 bis 10 ist, wobei s bevorzugt gleich 2 ist;
- R² für einen linearen oder verzweigten, aliphatischen oder cyclischen, gesättigten oder ungesättigten zweiwertigen Alkylenrest mit 2 bis 22 Kohlenstoffatomen, bevorzugt 2 bis 18, bevorzugt 2 bis 14, vorzugsweise 2 bis 10 und vorteilhafterweise 2 bis 6 Kohlenstoffatomen steht;
• Formel (II-3):
CH₂=CH-C(=O)-O-[R³-O]ₜ-H (II-3),
in der R³ für einen linearen oder verzweigten, aliphatischen oder cyclischen, gesättigten oder ungesättigten zweiwertigen Alkylenrest mit 2 bis 4 Kohlenstoffatomen steht und t eine ganze Zahl im Bereich von 2 bis 120, bevorzugt von 1 bis 10, ist, wobei t bevorzugt gleich 2 oder 3 ist,
wobei der hydroxylierte Acrylsäureester vorzugsweise eine der folgenden Formeln (II-1-1) oder (II-1-2) aufweist:
-
CH₂=CH-C(=O)-O-CH₂-CH₂-OH (II-1-1) :
2-Hydroxyethylacrylat (HEA)
-
CH₂=CH-C(=O)-O-CH₂-CH(Me)-OH (II-1-2):
2-Hydroxypropylacrylat (HPA).

6. Zusammensetzung nach einem der Ansprüche 1 bis 4, wobei das hydroxylierte Acrylsäureamid die folgende Formel (II') aufweist:
CH₂=CH-C(=O)-N(Rₐ)-R'⁰-OH (II'),
in der Rₐ wie oben definiert ist und R'⁰ für einen linearen oder verzweigten, aliphatischen oder cyclischen, gesättigten oder ungesättigten zweiwertigen Kohlenwasserstoffrest steht, der vorzugsweise 1 bis 240 Kohlenstoffatome umfasst und gegebenenfalls durch ein oder mehrere Heteroatome (wie beispielsweise N, O, S und insbesondere O) unterbrochen ist und/oder gegebenenfalls durch einen oder mehrere aromatische Gruppen unterbrochen ist und/oder gegebenenfalls durch eine oder mehrere zweiwertige Gruppen -N(R_{b})-, wobei R_{b} wie oben definiert ist (tertiäres Amin), -COO- (Ester), -C(=O)NH- (Amid), -NHC(=O)O- (Carbamat), -NHC(=O)NH- (Harnstoff) oder -C(=O)- (Carbonyl) unterbrochen ist und/oder gegebenenfalls substituiert ist.

7. Zusammensetzung nach einem der Ansprüche 4 bis 6, wobei das Polyisocyanat bzw. die Polyisocyanate aus Diisocyanaten und Triisocyanaten ausgewählt ist bzw. sind,
- wobei die Diisocyanate bevorzugt ausgewählt sind aus der Gruppe bestehend aus Isophorondiisocyanat (IPDI), Hexamethylendiisocyanat (HDI), Heptandiisocyanat, Octandiisocyanat, Nonandiisocyanat, Decandiisocyanat, Undecandiisocyanat, Dodecandiisocyanat, 4,4'-Methylenbis(cyclohexylisocyanat) (4,4'-HMDI), Norbornandiisocyanat, Norbornendiisocyanat, 1,4-Cyclohexandiisocyanat (CHDI), Methylcyclohexandiisocyanat, Ethylcyclohexandiisocyanat, Propylcyclohexandiisocyanat, Methyldiethylcyclohexandiisocyanat, Cyclohexandimethylendiisocyanat, 1,5-Diisocyanato-2-methylpentan (MPDI), 1,6-Diisocyanato-2,4,4-trimethylhexan, 1,6-Diisocyanato-2,2,4-trimethylhexan (TMDI), 4-Isocyanatomethyl-1,8-octandiisocyanat (TIN), (2,5)-Bis(isocyanatomethyl)bicyclo[2.2.1]heptan (2,5-NBDI), (2,6)-Bis(isocyanatomethyl)bicyclo[2.2.1]heptan (2,6-NBDI), 1,3-Bis(isocyanatomethyl)cyclohexan (1,3-H6-XDI), 1,4-Bis(isocyanatomethyl)cyclohexan (1,4-H6-XDI), Xylylendiisocyanat (XDI) (insbesondere m-Xylylendiisocyanat (m-XDI)), Toluoldiisocyanat (insbesondere 2,4-Toluoldiisocyanat (2,4-TDI) und/oder 2,6-Toluoldiisocyanat (2,6-TDI)), Diphenylmethandiisocyanat (insbesondere 4,4'-Diphenylmethandiisocyanat (4,4'-MDI) und/oder 2,4'-Diphenylmethandiisocyanat (2,4'-MDI)), Tetramethylxylylendiisocyanat (TMXDI) (insbesondere Tetramethyl(meta)xylylendiisocyanat), einem HDI-Allophanate, das beispielsweise die nachstehende Formel (Y) aufweist): 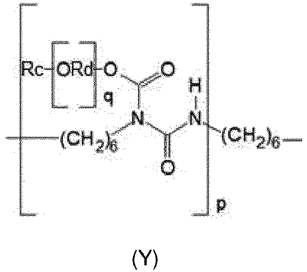 in der p eine ganze Zahl im Bereich von 1 bis 2 ist, q eine ganze Zahl im Bereich von 0 bis 9 und bevorzugt 2 bis 5 ist, R_{c} für eine gesättigte oder ungesättigte, cyclische oder acyclische, lineare oder verzweigte Kohlenwasserstoffkette mit 1 bis 20 Kohlenstoffatomen, bevorzugt 6 bis 14 Kohlenstoffatomen, steht und R_{d} für eine lineare oder verzweigte zweiwertige Alkylengruppe mit 2 bis 4 Kohlenstoffatomen und bevorzugt eine zweiwertige Propylengruppe steht;
und Mischungen davon;
- wobei die Triisocyanate bevorzugt aus Isocyanuraten, Biureten und Addukten von Diisocyanaten und Triolen ausgewählt sind.

8. Zusammensetzung nach einem der Ansprüche 4 bis 7, wobei:
- das Polyisocyanat bzw. die Polyisocyanate aus Toluoldiisocyanat (insbesondere dem 2,4-TDI-Isomer, dem 2,6-TDI-Isomer oder Mischungen davon), meta-Xylylen, HDI-Isocyanurat und Mischungen davon ausgewählt ist bzw. sind; und/oder
- der Schritt E1) in Gegenwart einer Mischung von Polyolen, die bevorzugt mindestens ein Polyetherpolyol, bevorzugt mindestens zwei Polyetherpolyole und/oder mindestens einen Polyester umfasst, wobei die Mischung von Polyolen vorteilhafterweise ein Polyetherdiol und ein Polyethertriol und ein Polyesterdiol umfasst, durchgeführt wird.

9. Zusammensetzung nach einem der Ansprüche 1 bis 8, wobei das Polyamin B1 die folgende Formel (III) aufweist:
NH₂-CH₂-Z-CH₂-NH₂ (III)
in der Z für einen linearen oder verzweigten, cyclischen, aliphatischen oder aromatischen, gesättigten oder ungesättigten zweiwertigen Kohlenwasserstoffrest, der vorzugsweise 1 bis 22 Kohlenstoffatome umfasst, steht, wobei der Kohlenwasserstoffrest gegebenenfalls durch ein oder mehrere Heteroatome, die aus -S- und -O- ausgewählt sind, und/oder eine oder mehrere zweiwertige tertiäre Amingruppen -NR‴-, wobei R‴ für eine lineare oder verzweigte, gesättigte oder ungesättigte Alkylgruppe mit 1 bis 22 Kohlenstoffatomen, bevorzugt 1 bis 18, bevorzugt 1 bis 14, vorzugsweise 1 bis 10 und vorteilhafterweise 1 bis 6 Kohlenstoffatomen steht, unterbrochen ist;
wobei das Polyamin B1 bevorzugt eine der nachstehenden Formeln (III-1), (III-2) oder (III-3) aufweist:
H₂N-CH₂-R⁴-CH₂-NH₂ (III-1) 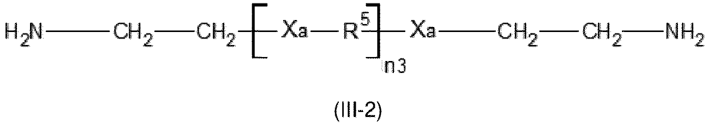 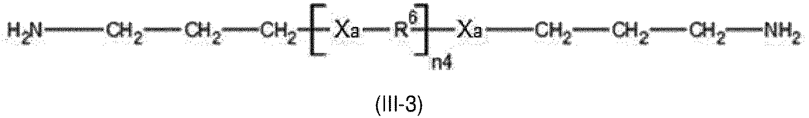
in denen:
- R⁴ für einen linearen oder verzweigten zweiwertigen Alkylenrest oder einen zweiwertigen Arylenrest mit 1 bis 18 Kohlenstoffatomen steht, wobei R⁴ bevorzugt für einen linearen Alkylenrest mit 6, 10 oder 12 Kohlenstoffatomen steht;
- R⁵ für einen linearen oder verzweigten zweiwertigen Alkylenrest mit 2 bis 12 Kohlenstoffatomen, vorzugsweise Ethylen oder Propylen, steht,
- R⁶ für einen linearen oder verzweigten zweiwertigen Alkylenrest mit 2 bis 10 Kohlenstoffatomen, vorzugsweise Ethylen oder Propylen, steht,
- Xₐ = O, S, NR⁷, wobei R⁷ für H oder eine lineare oder verzweigte, gesättigte oder ungesättigte Alkylgruppe mit 1 bis 10 Kohlenstoffatomen, vorzugsweise 1 bis 4 Kohlenstoffatomen, steht, wobei X bevorzugt für O steht;
- n₃ eine ganze Zahl im Bereich von 0 bis 4 ist und vorteilhafterweise gleich 1 oder 2 ist;
- n₄ eine ganze Zahl im Bereich von 0 bis 2 ist und vorteilhafterweise gleich 1 ist.

10. Zusammensetzung nach einem der Ansprüche 1 bis 9, wobei das Polyamin B1 eine primäre Alkalinität größer als oder gleich 7 meq/g, bevorzugt größer als oder gleich 10 meq/g, vorzugsweise größer als oder gleich 13 meq/g, aufweist.

11. Zusammensetzung nach einem der Ansprüche 1 bis 10, wobei das Polyamin B2 und die Mischung von Polyaminen B2 eine primäre Alkalinität von streng weniger als 10,00 meq/g, bevorzugt zwischen 3,0 und weniger als 10,00 meq/g, aufweist.

12. Zusammensetzung nach einem der Ansprüche 1 bis 11, wobei das Polyamin B2 ausgewählt ist aus:
- Polyetherdiaminen, wie beispielsweise:
∘ Polyetherdiaminen, die der nachstehenden Formel entsprechen: 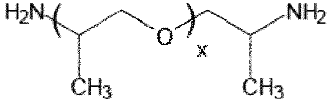 in der x eine solche ganze Zahl ist, dass die primäre Alkalinität des Polyetherdiamins zwischen 0,5 und weniger als 10 meq/g liegt, wobei x bevorzugt im Bereich von 2 bis 68 liegt;
∘ Polyetherdiaminen, die der nachstehenden Formel entsprechen: 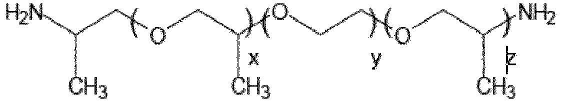 in der x, y und z solche ganze Zahlen sind, dass die primäre Alkalinität zwischen 1 und weniger als 10 meq/g liegt, wobei y bevorzugt im Bereich von 2 bis 39 liegt und x + z im Bereich von 1 bis 6 liegt;
∘ Polyetherdiaminen, die der nachstehenden Formel entsprechen:
H₂N-X_{b}(-O-X_{b})ₘ₋₁-O-(CH₂-CH₂-CH₂-CH₂-O)ₙ-(X_{b}-O)ₘ₋₁-X_{b}-NH₂
in der X_{b} eine lineare oder verzweigte Alkylengruppe mit bevorzugt 2 bis 20 Kohlenstoffatomen, bevorzugt 2 bis 10 Kohlenstoffatomen, ist, m eine ganze Zahl im Bereich von 1 bis 20 ist und n eine ganze Zahl im Bereich von 1 bis 100 ist;
∘ Polyethertriaminen, wie beispielsweise denjenigen, die der nachstehenden Formel entsprechen: 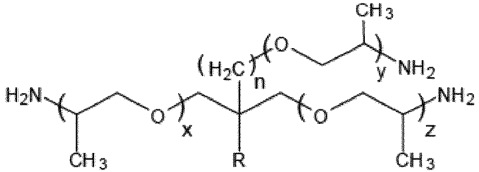 in der R ein Wasserstoffatom oder eine C1- bis C2-Alkylgruppe ist und x, y, z und n solche ganze Zahlen sind, dass die primäre Alkalinität des Polyethertriamins zwischen 0,5 und weniger als 10 meq/g liegt, wobei n bevorzugt im Bereich von 0 bis 1 liegt und x + y + z im Bereich von 5 bis 85 liegt.

13. Zusammensetzung nach einem der Ansprüche 1 bis 12, wobei das Polyamin B2 aus Polyethyleniminen (PEI) ausgewählt ist, bevorzugt mit einer zahlenmittleren Molmasse (Mn) im Bereich von 450 bis 25.000 g/mol und einem Verhältnis von primärer Alkalinität zu Gesamtalkalinität im Bereich von 0,35 bis 0,45, und insbesondere mit einem Rest der folgenden Formel:

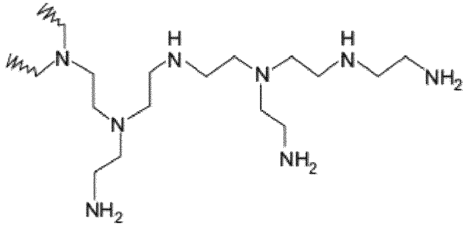

14. Mehrschichtstruktur, mit mindestens zwei Materialschichten, die durch eine Klebstoffschicht miteinander verbunden sind, **dadurch gekennzeichnet, dass** die Klebstoffschicht aus der Zusammensetzung nach einem der Ansprüche 1 bis 13 in vernetztem Zustand besteht, wobei die Klebstoffschicht bevorzugt eine Dicke im Bereich von 1,5 bis 5 µm aufweist.

15. Verfahren zur Herstellung einer Mehrschichtstruktur nach Anspruch 14, das die folgenden Schritte umfasst:
- Mischen der Zusammensetzung A und der Zusammensetzung B, dann
- Beschichten der Oberfläche einer ersten Materialschicht mit der Mischung, dann
- Auflaminieren der Oberfläche einer zweiten Materialschicht auf die beschichtete Oberfläche, dann
- Vernetzen der Mischung.

## Claims

1. Composition, preferably an adhesive composition, comprising:
- a composition A comprising at least one polyurethane comprising at least two acrylic end functions T of formula (I) below:
CH₂=CH-C(=O)-X- (I)
with X representing -O- or -NRₐ- with Rₐ representing H or an alkyl radical comprising from 1 to 22 carbon atoms, preferably from 1 to 14 carbon atoms, X preferably representing -O-;
and
- a composition B comprising:
∘ at least one polyamine B1 comprising only two groups -CH₂NH₂; and
∘ at least one polyamine B2 comprising at least two primary amine functions -NH₂.

2. Composition according to Claim 2, in which the polyurethane comprising at least two end functions T is obtained by reaction:
- of a polyurethane comprising at least two -NCO end functions and of at least compound chosen from: a hydroxylated ester of acrylic acid or a hydroxylated amide of acrylic acid; or
- of a polyurethane comprising at least two -OH end functions and of at least one compound chosen from an acrylic acid chloride or an acrylic acid ester.

3. Composition according to either of Claims 1 and 2, in which the polyurethane comprising at least two end functions T is prepared via a process comprising the following steps:
- E1) the preparation of a polyurethane bearing NCO end groups via a polyaddition reaction:
i) of at least one polyisocyanate, preferably chosen from diisocyanates, triisocyanates, and mixtures thereof;
ii) with at least one polyol, preferably chosen from polyester polyols, polyether polyols, polyene polyols, polycarbonate polyols, poly(ether-carbonate) polyols, polymers bearing -OH end groups, and mixtures thereof; in amounts such that the NCO/OH mole ratio (r3) is strictly greater than 1, preferably ranges from 1.3 to 2.0 and preferentially ranges from 1.5 to 1.7;
and
- E2) the reaction of the product formed on conclusion of step E1) with at least one hydroxylated ester of acrylic acid or at least one hydroxylated amide of acrylic acid, in amounts such that the OH/NCO mole ratio (r4) is less than or equal to 1, preferably ranges from 0.90 to 1.00 and preferentially ranges from 0.95 to 1.00.

4. Composition according to any one of Claims 1 to 3, in which the hydroxylated ester of acrylic acid has the formula (II) below:
CH₂=CH-C(=O)-O-R⁰-OH (II)
in which R° represents a linear or branched, aliphatic or cyclic, saturated or unsaturated divalent hydrocarbon-based radical, preferably comprising from 2 to 240 carbon atoms and being optionally interrupted with one or more heteroatoms (for instance N, O, S, and in particular O), and/or optionally interrupted with one or more aromatic groups, and/or optionally interrupted with one or more divalent groups -N(R_{b})- with R_{b} representing a linear or branched alkyl radical comprising from 1 to 22 carbon atoms (tertiary amine), -C(=O)O- (ester), -C(=O)NH-(amide), -NHC(=O)O- (carbamate), -NHC(=O)-NH- (urea), or -C(=O)- (carbonyl), and/or being optionally substituted.

5. Composition according to any one of Claims 1 to 4, in which the hydroxylated ester of acrylic acid has one of the following formulae:
• Formula (II-1):
CH₂=CH-C(=O)-O-R¹-OH (II-1)
in which R¹ represents a linear or branched, aliphatic or cyclic, saturated or unsaturated divalent alkylene radical, comprising from 2 to 22 carbon atoms, preferably from 2 to 18, preferably from 2 to 14, preferentially from 2 to 10 and advantageously from 2 to 6 carbon atoms;
• Formula (II-2):
CH₂=CH-C(=O)-O-R²-O-[C(=O)-(CH₂)ᵣ-O]ₛ-H (II-2)
in which:
- r is an integer ranging from 1 to 10, preferably from 1 to 5, and preferentially r is equal to 5;
- s is an integer ranging from 1 to 10, s preferably being equal to 2;
- R² represents a linear or branched, aliphatic or cyclic, saturated or unsaturated divalent alkylene radical, comprising from 2 to 22 carbon atoms, preferably from 2 to 18, preferably from 2 to 14, preferentially from 2 to 10 and advantageously from 2 to 6 carbon atoms;
• Formula (11-3):
CH₂=CH-C(=O)-O-[R³-O]ₜ-H (II- 3)
in which R³ represents a linear or branched, aliphatic or cyclic, saturated or unsaturated divalent alkylene radical, comprising from 2 to 4 carbon atoms, t is an integer ranging from 2 to 120, preferably from 1 to 10, t preferably being equal to 2 or 3,
said hydroxylated ester of acrylic acid preferably having one of the formulae (II-1-1) or (II-1-2) below:
-
CH₂=CH-C(=O)-O-CH₂-CH₂-OH (II-1-1):
2-hydroxyethyl acrylate (HEA)
-
CH₂=CH-C(=O)-O-CH₂-CH(Me)-OH (II-1-2):
2-hydroxypropyl acrylate (HPA).

6. Composition according to any one of Claims 1 to 4, in which the hydroxylated amide of acrylic acid has the formula (II') below:
CH₂=CH-C(=O)-N(Rₐ)-R'⁰-OH (II')
in which Rₐ is as defined above, and R'⁰ represents a linear or branched, aliphatic or cyclic, saturated or unsaturated divalent hydrocarbon-based radical, preferably comprising from 1 to 240 carbon atoms and being optionally interrupted with one or more heteroatoms (for instance N, O, S, and in particular O), and/or optionally interrupted with one or more aromatic groups, and/or optionally interrupted with one or more divalent groups -N(R_{b})- with R_{b} being as defined above (tertiary amine), -COO- (ester), -C(=O)NH- (amide), -NHC(=O)O-(carbamate), -NHC(=O)-NH- (urea), or -C(=O)- (carbonyl), and/or being optionally substituted.

7. Composition according to any one of Claims 4 to 6, in which the polyisocyanate(s) are chosen from diisocyanates and triisocyanates,
- the diisocyanates preferably being chosen from the group consisting of isophorone diisocyanate (IPDI), hexamethylene diisocyanate (HDI), heptane diisocyanate, octane diisocyanate, nonane diisocyanate, decane diisocyanate, undecane diisocyanate, dodecane diisocyanate, 4,4'-methylenebis(cyclohexyl isocyanate) (4,4'-HMDI), norbornane diisocyanate, norbornene diisocyanate, 1,4-cyclohexane diisocyanate (CHDI), methylcyclohexane diisocyanate, ethylcyclohexane diisocyanate, propylcyclohexane diisocyanate, methyldiethylcyclohexane diisocyanate, cyclohexanedimethylene diisocyanate, 1,5-diisocyanato-2-methylpentane (MPDI), 1,6-diisocyanato-2,4,4-trimethylhexane, 1,6-diisocyanato-2,2,4-trimethylhexane (TMDI), 4-isocyanatomethyl-1,8-octane diisocyanate (TIN), (2,5)-bis(isocyanatomethyl)bicyclo[2.2.1]heptane (2,5-NBDI), (2,6)-bis(isocyanatomethyl)bicyclo[2.2.1]heptane (2,6-NBDI), 1,3-bis(isocyanatomethyl)cyclohexane (1,3-H6-XDI), 1,4-bis(isocyanatomethyl)cyclohexane (1,4-H6-XDI), xylylene diisocyanate (XDI) (in particular m-xylylene diisocyanate (m-XDI)), toluene diisocyanate (in particular 2,4-toluene diisocyanate (2,4-TDI) and/or 2,6-toluene diisocyanate (2,6-TDI)), diphenylmethane diisocyanate (in particular 4,4'-diphenylmethane diisocyanate (4,4'-MDI) and/or 2,4'-diphenylmethane diisocyanate (2,4'-MDI)), tetramethylxylylene diisocyanate (TMXDI) (in particular tetramethyl(meta)xylylene diisocyanate), an HDI allophanate having, for example, the formula (Y) below: 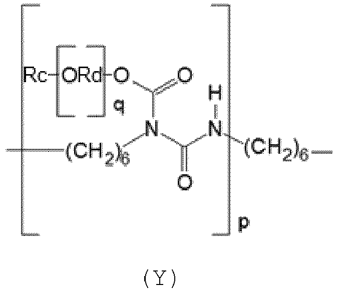 in which p is an integer ranging from 1 to 2, q is an integer ranging from 0 to 9 and preferably 2 to 5, R_{c} represents a saturated or unsaturated, cyclic or acyclic, linear or branched hydrocarbon-based chain comprising from 1 to 20 carbon atoms, preferably from 6 to 14 carbon atoms, R_{d} represents a linear or branched divalent alkylene group containing from 2 to 4 carbon atoms, and preferably a divalent propylene group;
and mixtures thereof;
- the triisocyanates preferably being chosen from isocyanurates, biurets and adducts of diisocyanates and of triols.

8. Composition according to any one of Claims 4 to 7, in which:
- the polyisocyanate(s) are chosen from toluene diisocyanate (in particular the isomer 2,4-TDI, the isomer 2,6-TDI or mixtures thereof), meta-xylylene, HDI isocyanurate, and mixtures thereof; and/or
- step E1) is performed in the presence of a mixture of polyols, preferably comprising at least one, preferentially at least two, polyether polyol and/or at least one polyester; advantageously, the mixture of polyols comprises a polyether diol and a polyether triol, and a polyester diol.

9. Composition according to any one of Claims 1 to 8, in which the polyamine B1 has the formula (III) below:
NH₂-CH₂-Z-CH₂-NH₂ (III)
in which Z represents a linear or branched, cyclic, aliphatic or aromatic, saturated or unsaturated divalent hydrocarbon-based radical, preferably comprising from 1 to 22 carbon atoms, said hydrocarbon-based radical being optionally interrupted with one or more heteroatoms chosen from -S-, -O- and/or one or more divalent tertiary amine groups -NR'''- with R‴ representing a linear or branched, saturated or unsaturated alkyl group, comprising 1 to 22 carbon atoms, preferably from 1 to 18,
preferably from 1 to 14, preferentially from 1 to 10 and advantageously from 1 to 6 carbon atoms;
polyamine B1 preferably having one of the formulae (III-1), (III-2) or (III-3) below:
H₂N-CH₂-R⁴-CH₂-NH₂ (III-1) 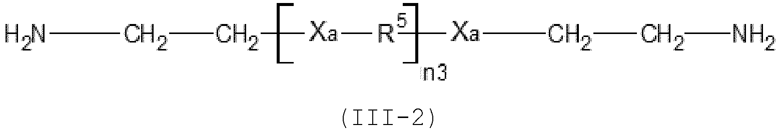 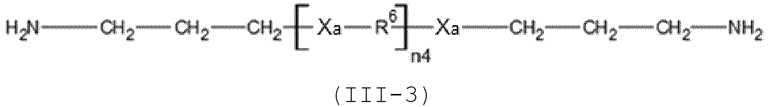
in which:
- R⁴ is a linear or branched divalent alkylene radical, or a divalent arylene radical, comprising from 1 to 18 carbon atoms, R⁴ preferably representing a linear alkylene radical comprising 6, 10 or 12 carbon atoms;
- R⁵ represents a linear or branched divalent alkylene radical comprising from 2 to 12 carbon atoms, preferentially of ethylene or propylene type,
- R⁶ represents a linear or branched divalent alkylene radical comprising from 2 to 10 carbon atoms, preferentially of ethylene or propylene type,
- Xₐ = O, S, NR⁷ in which R⁷ represents H or a linear or branched, saturated or unsaturated alkyl group comprising from 1 to 10 carbon atoms, preferentially 1 to 4 carbon atoms, X preferably representing O;
- n₃ is an integer ranging from 0 to 4, and advantageously being equal to 1 or 2;
- n₄ is an integer ranging from 0 to 2, and advantageously being equal to 1.

10. Composition according to any one of Claims 1 to 9, in which polyamine B1 has a primary alkalinity of greater than or equal to 7 meq./g, preferably greater than or equal to 10 meq./g, preferentially greater than or equal to 13 meq./g.

11. Composition according to any one of Claims 1 to 10, in which polyamine B2 or the mixture of polyamines B2 has a primary alkalinity strictly less than 10.00 meq./g, preferably between 3.0 and less than 10.00 meq./g.

12. Composition according to any one of Claims 1 to 11, in which polyamine B2 is chosen from:
- polyetherdiamines, for instance:
∘ polyetherdiamines corresponding to the formula below: 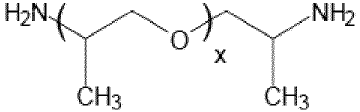 in which x is an integer such that the primary alkalinity of the polyetherdiamine is between 0.5 and less than 10 meq./g, x preferably ranging from 2 to 68;
∘ polyetherdiamines corresponding to the formula below: 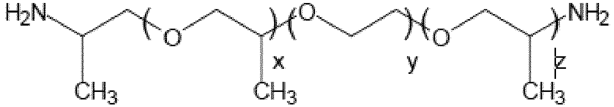 in which x, y and z are integers such that the primary alkalinity is between 1 and less than 10 meq./g, y preferably ranging from 2 to 39 and x + z ranging from 1 to 6;
∘ polyetherdiamines corresponding to the following formula:
H₂N-X_{b}(-O-X_{b})ₘ₋₁-O-(CH₂-CH₂-CH₂-CH₂-O)ₙ-(X_{b}-O)ₘ₋₁-X_{b}-NH₂
in which X_{b} is a linear or branched alkylene group preferably comprising from 2 to 20 carbon atoms, preferably from 2 to 10 carbon atoms, m is an integer ranging from 1 to 20 and n is an integer ranging from 1 to 100;
- polyethertriamines, for instance those corresponding to the formula below: 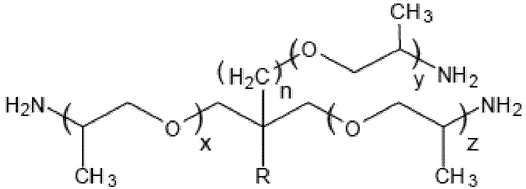 in which R is a hydrogen atom or a C₁ to C₂ alkyl group, x, y, z and n are integers such that the primary alkalinity of the polyethertriamine is between 0.5 and less than 10 meq./g, n preferably ranging from 0 to 1 and x + y + z ranging from 5 to 85.

13. Composition according to any one of Claims 1 to 12, in which polyamine B2 is chosen from polyethyleneimines (PEI) preferably with a number-average molecular mass (Mn) ranging from 450 to 25 000 g/mol and a primary alkalinity/total alkalinity ratio ranging from 0.35 to 0.45, and in particular containing at least one radical having the following formula:

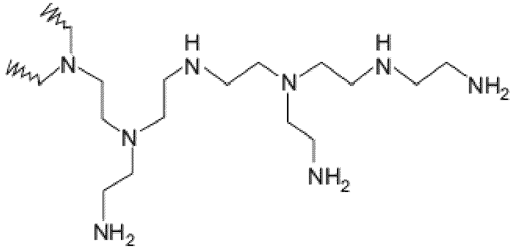

14. Multilayer structure comprising at least two layers of material bonded together by an adhesive layer, **characterized in that** said adhesive layer consists of the composition according to any one of Claims 1 to 13, in the crosslinked state, the adhesive layer preferably having a thickness ranging from 1.5 to 5 pm.

15. Process for manufacturing a multilayer structure according to Claim 14, comprising the following steps:
- mixing composition A and composition B, then
- coating said mixture over the surface of a first layer of material, then
- laminating the surface of a second layer of material over said coated surface, then
- crosslinking said mixture.
